# EUROPÄISCHE PATENTSCHRIFT

(11) **EP 3 689 473 B1**
(45) Veröffentlichungstag und Bekanntmachung des Hinweises auf die Patenterteilung: **01.09.2021**
(21) Anmeldenummer: 20157088.4
(22) Anmeldetag: 01.12.2017
(51) Int. Cl.: B05B 12/14, B05B 15/55, B05B 15/555, B05B 15/58, B05B 15/531, B05B 1/16, B41J 2/165, B41J 3/407, B41J 3/54, B25J 11/00, B05B 13/04

(54) **BESCHICHTUNGSEINRICHTUNG UND ENTSPRECHENDES BESCHICHTUNGSVERFAHREN**
COATING DEVICE AND ASSOCIATED COATING METHOD
DISPOSITIF DE REVÊTEMENT ET PROCÉDÉ DE REVÊTEMENT CORRESPONDANT

(30) Priorität: 14.12.2016 DE 102016014955
(43) Veröffentlichungstag der Anmeldung: 05.08.2020
(62) Teilanmeldung aus: 17809256.5
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB

(56) Entgegenhaltungen:
- EP-A1- 2 641 661
- WO-A1-2018/102846
- DE-A1-102012 005 087
- JP-A- 2013 067 179
- US-A- 4 985 715

## Beschreibung

Die Erfindung betrifft eine Beschichtungseinrichtung zur Beschichtung von Bauteilen mit einem Beschichtungsmittel, insbesondere zur Lackierung von Kraftfahrzeugkarosseriebauteilen mit einem Lack. Weiterhin betrifft die Erfindung ein entsprechendes Betriebsverfahren.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Die bekannten Druckköpfe sind jedoch nicht auf einen Farbwechsel ausgelegt und eignen sich deshalb in der bisherigen Form nur sehr eingeschränkt zur Serienlackierung von Kraftfahrzeugkarosseriebauteilen in einer Lackieranlage.

Darüber hinaus kann es in Lackierpausen passieren, dass der Lack in dem Druckkopf antrocknet oder austrocknet, was im schlimmsten Fall zu einem Funktionsverlust des Druckkopfs führen kann.

Ferner ist zum allgemeinen technischen Hintergrund der Erfindung hinzuweisen auf DE 601 25 369 T2, DE 10 2010 019 612 A1, WO 2005/016556 A1, DE 698 36 128 T2, DE 10 2004 044 655 A1, DE 10 2013 205 171 A1, DE 600 01 898 T2, EP 1 946 846 A2, DE 10 2013 002 412 A1 und DE 689 24 202 T2.

Darüber hinaus ist auf die nachveröffentlichte ältere europäische Patentanmeldung 17822540.5, veröffentlicht als WO 2018/102846 A1, auf US 4,985,715 und auf EP 2 641 661 A1 hinzuweisen. Dieser Stand der Technik ist jedoch noch nicht vollständig befriedigend.

Der Erfindung liegt deshalb die Aufgabe zugrunde, eine entsprechend verbesserte Beschichtungseinrichtung bzw. ein entsprechend verbessertes Beschichtungsverfahren mit einem Druckkopf als Applikationsgerät zu schaffen.

Diese Aufgabe wird durch eine erfindungsgemäße Beschichtungseinrichtung bzw. ein erfindungsgemäßes Beschichtungsverfahren gemäß den unabhängigen Ansprüchen gelöst.

Die erfindungsgemäße Beschichtungseinrichtung dient zur Lackierung von Kraftfahrzeugkarosseriebauteilen mit einem Lack und ist konstruktiv entsprechend ausgelegt.

Darüber hinaus handelt es sich bei dem applizierten Beschichtungsmittel um Lack (z.B. Wasserlack, lösemittelbasierter Lack, Klarlack, Basislack, etc.).

Die erfindungsgemäße Beschichtungseinrichtung weist zunächst in Übereinstimmung mit dem Stand der Technik mindestens einen mehrachsigen Beschichtungsroboter auf, der eine mehrachsige Roboterhandachse und vorzugsweise eine serielle Roboterkinematik, mindestens sechs oder sieben bewegliche Roboterachsen aufweist. Derartige Beschichtungsroboter sind an sich aus dem Stand der Technik bekannt und müssen deshalb nicht näher beschrieben werden.

Darüber hinaus weist die erfindungsgemäße Beschichtungseinrichtung in Übereinstimmung mit dem Stand der Technik mindestens einen ersten Druckkopf auf, um das Beschichtungsmittel auf die Oberfläche des zu beschichtenden Bauteils zu applizieren. Der Druckkopf weist mindestens eine Düse auf, um einen Beschichtungsmittelstrahl des Beschichtungsmittels auf die Oberfläche des zu beschichtenden Bauteils abzugeben. Der im Rahmen der Erfindung verwendete Begriff eines Druckkopfs ist also zu unterscheiden von den üblicherweise als Applikationsgerät verwendeten Zerstäubern, die keinen räumlich eng begrenzten Beschichtungsmittelstrahl abgeben, sondern einen Sprühnebel des Beschichtungsmittels. Ansonsten ist der im Rahmen der Erfindung verwendete Begriff eines Druckkopfs allgemein zu verstehen, so dass verschiedene Konstruktionsprinzipien bekannter Druckköpfe eingesetzt werden können. Vorzugsweise ist der Druckkopf jedoch ähnlich aufgebaut zu den Druckköpfen, die beispielsweise in DE 10 2013 002 412 A1, US 9,108,424 B2 und DE 10 2010 019 612 A1 beschrieben sind. Weiterhin ist zu erwähnen, dass der Druckkopf mindestens ein Druckkopfventil aufweist, um die Beschichtungsmittelabgabe durch die Düse zu steuern. Dieses Druckkopfventil kann beispielsweise einen elektrisch ansteuerbaren Magnetaktor aufweisen, um die Ventilstellung einzustellen, wobei der Aufbau und die Funktionsweise eines solchen Druckkopfventils an sich aus dem Stand der Technik bekannt sind und deshalb nicht nä-her beschrieben werden müssen. Der Druckkopf ist hierbei an dem Beschichtungsroboter montiert und wird von dem Beschichtungsroboter programmgesteuert über die Oberfläche des zu beschichtenden Bauteils geführt, was ebenfalls aus dem Stand der Technik bekannt ist. Gemäß einer ersten Variante kann der erste Drucckopf auswechselbar an dem Beschichtungsroboter montiert sein und kann bei einem Farbwechsel gegen einen zweiten Druckkopf ausgewechselt werden, so dass die Druckköpfe selbst keinen Farbwechsel durchmachen müssen, sondern einfach durch einen anderen Druckkopf ausgetauscht werden.

Gemäß einer zweiten Variante kann dagegen an dem Beschichtungsroboter zusätzlich zu dem ersten Druckkopf mindestens ein zweiter Druckkopf montiert sein, wobei die beiden Druccköpfe jeweils ein bestimmtes Beschichtungsmittel applizieren, um ohne einen Druckkopfaustausch einen Farbwechsel zu ermöglichen. Der erste Druckkopf kann dann beispielsweise schwarzen Lack applizieren, wohingegen der zweite Druckkopf beispielsweise silbernen Lack applizieren kann.

Bei der vorstehend kurz beschriebenen ersten Variante ist vorzugsweise eine Ablageeinrichtung vorgesehen, um den von dem Beschichtungsroboter demontierten ersten Druckkopf in der Ablageeinrichtung abzulegen und anstelle des abgelegten ersten Druckkopfs den zweiten Druckkopf aus der Ablageeinrichtung aufzunehmen.

Die Ablageeinrichtung ist vorzugsweise ortsfest in der Beschichtungseinrichtung angeordnet und von dem Beschichtungsroboter erreichbar, so dass der Beschichtungsroboter den gerade montierten Druckkopf in der Ablageeinrichtung ablegen und den zuvor in der Ablageeinrichtung befindlichen anderen Druckkopf aus der Ablageeinrichtung aufnehmen kann. Bei einem Farbwechsel legt der Beschichtungsroboter also den montierten Druckkopf in der Ablageeinrichtung ab und nimmt einen neuen Druckkopf aus der Ablageeinrichtung auf, damit dann mit diesem neuen Druckkopf auch die neue Farbe appliziert werden kann.

Vorzugsweise ist die Ablageeinrichtung eine Nassablageeinrichtung oder Nasshaltevorrichtung, in der die Düsen des abgelegten Druckkopfs feucht gehalten werden, um ein Antrocknen des flüssigen Beschichtungsmittels während der Ablage zu verhindern.

Der erfindungsgemäße Gedanke einer Nassablageeinrichtung kann auch im Zusammenhang mit einem fest montierten Druckkopf realisiert werden, d.h. bei einem Druckkopf, der nicht auswechselbar an dem Beschichtungsroboter montiert ist. Hierbei kann der Beschichtungsroboter den Druckkopf dann in Beschichtungspausen (z.B. in Schichtpausen oder während Wartungspausen) in der Nassablageeinrichtung platzieren, damit der Lack in dem Druckkopf nicht antrocknet.

In einem einfachen Ausführungsbeispiel einer solchen Nassablageeinrichtung kann ein Flüssigkeitsbad vorgesehen sein, das mit einer Flüssigkeit (z.B. Spülmittel, Verdünner) gefüllt ist und in das der Druckkopf während der Ablage zumindest teilweise eingetaucht wird, wobei die Flüssigkeit ein Antrocknen des flüssigen Beschichtungsmittels auf der Außenseite des Druckkopfs während der Ablage verhindert. Beim Eintauchen des Druckkopfs in das Flüssigkeitsbad sollten dann zumindest die Düsen des Druckkopfs in das Flüssigkeitsbad eingetaucht sein, da die Düsen einen sehr kleinen Düsenquerschnitt haben und deshalb relativ leicht zusetzen können.

In einem anderen Ausführungsbeispiel ermöglicht die Nassablageeinrichtung dagegen eine Fluidzirkulation durch den abgelegten Druckkopf. Hierzu weist der Druckkopf neben den Düsen jeweils einen Einlass und einen Auslass auf, um eine Flüssigkeit (z.B. Beschichtungsmittel, Spülmittel) durch den Drucckopf zirkulieren lassen zu können. Die Nassablageeinrichtung weist dann eine Andockeinrichtung auf, die es ermöglicht, mit Zirkulationsanschlüssen an den Einlass und den Auslass des abgelegten Druckkopfs anzudocken, damit die Nassablageeinrichtung dann eine Flüssigkeit (z.B. Beschichtungsmittel oder Spülmittel) durch den abgelegten Druckkopf zirkulieren zu lassen. Bei der Ablage des Druckkopfs durch den Beschichtungsroboter in der Nassablageeinrichtung erfolgt also zum einen eine Trennung des Druckkopfs von dem Beschichtungsroboter und zum anderen eine Verbindung des Druckkopfs mit der Andockeinrichtung in der Nassablageeinrichtung.

Die Fluidzirkulation durch den abgelegten Druckkopf kann hierbei mit der zuvor verwendeten Farbe erfolgen, so dass der Druckkopf dann bereit ist, um wieder zur Applikation mit derselben Farbe von dem Beschichtungsroboter aufgenommen zu werden.

Es besteht jedoch alternativ auch die Möglichkeit, dass der abgelegte Druckkopf mit einem Spülmittel gereinigt und dann mit einem andersfarbigen Beschichtungsmittel angedrückt (d.h. gefüllt) wird, damit der Druckkopf dann für eine Applikation mit dem neuen Beschichtungsmittel bereit ist.

In der vorstehend kurz erwähnten zweiten Variante sind dagegen an dem Beschichtungsroboter mindestens zwei Druckköpfe montiert, die abwechselnd betrieben werden können. Dies ermöglicht auch einen sogenannten A/B-Betrieb, in dem der Druckkopf A Beschichtungsmittel appliziert, während der andere Druckkopf B mit einem Spülmittel gespült und ggf. mit einem andersfarbigen Beschichtungsmittel angedrückt wird. Anschließend wird dann mit dem Druckkopf B Beschichtungsmittel appliziert, während der Druckkopf A mit Spülmittel gespült und ggf. mit einem andersfarbigen Beschichtungsmittel angedrückt wird. Dieser A/B-Betrieb ermöglicht bei einem Farbwechsel eine unterbrechungsfreie Beschichtung, da ohne Pause von dem Druckkopf A auf den Druckkopf B bzw. umgekehrt umgeschaltet werden kann. Die zum Spülen und Andrücken des Drucckopfs erforderliche Zeit führt hierbei also nicht zu einer Unterbrechung des Beschichtungsbetriebs, was vorteilhaft ist.

Weiterhin besteht bei der vorstehend kurz erwähnten zweiten Variante die Möglichkeit, dass die mindestens zwei Druckköpfe an dem Beschichtungsroboter durch jeweils einen separaten Beschichtungsmittelkreis mit Beschichtungsmittel versorgt werden. Dies bietet den Vorteil, dass im Gegensatz zu dem vorstehend beschriebenen A/B-Betrieb kein separates A/B-Ventil bzw. eine entsprechende Ventilanordnung erforderlich ist. Allerdings müssen die beiden Beschichtungsmittelkreise dann durch den Beschichtungsroboter hindurch bis zu den beiden Druckköpfen geführt werden.

Es wurde bereits vorstehend kurz erwähnt, dass bei der zweiten Variante an dem Beschichtungsroboter mindestens zwei Druckköpfe montiert sind, die wahlweise betrieben werden können. Dies bietet den Vorteil, dass die einzelnen Druckköpfe jeweils nur von einem Beschichtungsmittel durchströmt werden. Die Anzahl der an dem Beschichtungsroboter montierten Druckköpfe ist deshalb vorzugsweise größer als 2, und kleiner als 6. Die einzelnen Druckköpfe sind dann vorzugsweise an eine separate Beschichtungsmittelzuleitung angeschlossen, so dass die Beschichtungsmittelzuleitungen jeweils nur von dem zugehörigen Beschichtungsmittel durchströmt werden.

Bei dieser zweiten Variante besteht auch die Möglichkeit, dass einige Druckköpfe für häufig verwendete Beschichtungsmittel ("high runner") vorgesehen sind und dann jeweils nur von dem zugehörigen häufig verwendeten Beschichtungsmittel durchströmt werden, ohne dass ein Farbwechsel an diesen Druckköpfen vorgesehen ist. Ein anderer Teil der Druckköpfe oder sogar nur ein einziger Druckkopf ist dagegen zur Applikation von selten verwendeten Beschichtungsmitteln ("low runner") vorgesehen und ermöglicht dabei einen Farbwechsel zwischen den verschiedenen selten verwendeten Beschichtungsmitteln. Dies bietet den Vorteil, dass bei den häufig verwendeten Beschichtungsmitteln überhaupt kein Farbwechsel mit entsprechenden Verlusten erforderlich ist. Bei der Applikation der selten verwendeten Beschichtungsmittel ist dann zwar ein Farbwechsel mit entsprechenden Verlusten erforderlich, allerdings fällt dies kaum ins Gewicht, da die mit Farbwechselverlusten verbundenen seltenen Beschichtungsmittel eben nur selten verwendet werden.

Darüber hinaus weist die erfindungsgemäße Beschichtungseinrichtung eine Zeitsteuerung auf, um die Druckköpfe zeitgesteuert zu spülen. Beispielsweise kann die Zeitsteuerung jeweils nach Ablauf eines vorgegebenen Spülintervalls einen Spülvorgang auslösen, beispielsweise nach einem Spülintervall von 1h, 2h oder 4h. Darüber hinaus besteht die Möglichkeit, dass die Zeitsteuerung jeweils nach Ablauf einer vorgegebenen Stillstandsdauer eines die zu beschichtenden Bauteile fördernden Förderers einen Spülvorgang auslöst, beispielsweise nach einer Stillstandsdauer von mehr als 10min, 20min, 30min oder 1h. Diese beiden Varianten einer Zeitsteuerung können jeweils allein oder in Kombination miteinander eingesetzt werden.

Darüber hinaus umfasst die erfindungsgemäße Beschichtungseinrichtung vorzugsweise eine Reinigungsvorrichtung, um die montierten oder demontierten Druckköpfe zu reinigen. Aus dem Stand der Technik sind sogenannte Zerstäuberreinigungsgeräte bekannt, in die der Beschichtungsroboter den montierten Rotationszerstäuber einführt, wobei der Rotationszerstäuber dann innerhalb der Reinigungsvorrichtung mit einer Reinigungsflüssigkeit (z.B. Verdünner) besprüht wird, um den Rotationszerstäuber von außen zu reinigen. Die erfindungsgemäße Reinigungsvorrichtung kann ähnlich aufgebaut sein, wobei die Reinigungsvorrichtung natürlich an die andere Außenkontur des Druckkopfs und an fehlende Funktionen wie z.B. Lenkluft angepasst ist.

Die Reinigungsvorrichtung ist vorzugsweise getrennt von dem Beschichtungsroboter ortsfest angeordnet, wobei die Reinigungsvorrichtung innerhalb des Arbeitsbereichs des Beschichtungsroboters angeordnet sein muss, damit der Beschichtungsroboter den Druckkopf in die Reinigungsvorrichtung einführen kann.

In einem bevorzugten Ausführungsbeispiel der Erfindung bilden die Reinigungsvorrichtung und die Ablageeinrichtung ein einheitliches Bauteil. Dies bedeutet, dass die Ablageeinrichtung nicht nur zur Ablage, Aufnahme und Zwischenlagerung der Druckköpfe dient, sondern auch zur Reinigung der Druckköpfe und zwar im abgelegten Zustand und/oder im montierten Zustand an dem Beschichtungsroboter.

Die Erfindung ermöglicht vorzugsweise eine sehr kurze Farbwechselzeit, die vorzugsweise kürzer ist als 1h, 20min, 10min, 1min, 30s, 10s oder sogar kürzer als 5s.

Bei einer Stop-and-Go-Förderung der Kraftfahrzeugkarosseriebauteile durch die Lackieranlage ist die Farbwechselzeit vorzugsweise kürzer als die Wechselzeit zwischen zwei aufeinanderfolgenden Kraftfahrzeugkarosseriebauteilen, d.h. kürzer als die Förderdauer der Kraftfahrzeugkarosseriebauteile zwischen zwei Positionen.

Bei einer kontinuierlichen Line-Tracking-Förderung der Kraftfahrzeugkarosseriebauteile durch die Lackieranlage ist die Farbwechselzeit dagegen vorzugsweise kürzer als der zeitliche Abstand zwischen zwei aufeinanderfolgenden Kraftfahrzeugkarosseriebauteilen. Im A/B-Betrieb kann die Farbwechselzeit auf die Zeitdauer eines Karossentaktes ausgedehnt werden. Vorteilhaft ist weiterhin der geringe Beschichtungsmittelverlust bei einem Farbwechsel, wobei der Beschichtungsmittelverlust vorzugsweise kleiner ist als 51, 21, 200ml, 20ml, 10ml, 5ml oder sogar kleiner als 2ml.

Darüber hinaus entsteht bei einem Farbwechsel vorzugsweise ein sehr geringer Spülmittelbedarf, der vorzugsweise kleiner ist als 300ml, 250ml, 200ml, 100ml, 50ml, 20ml oder sogar kleiner als 10ml.

Allgemein ist zu bemerken, dass die Druckköpfe einen eng begrenzten Beschichtungsmittelstrahl abgeben im Gegensatz zu einem Sprühnebel, wie es bei herkömmlichen Zerstäubern (z.B. Rotationszerstäubern) der Fall ist.

In einer Variante der Erfindung geben die Druckköpfe jeweils einen Tröpfchenstrahl ab, der aus mehreren Tröpfchen besteht, die in Strahllängsrichtung voneinander getrennt sind im Gegensatz zu einem in Strahllängsrichtung zusammenhängenden Beschichtungsmittelstrahl.

Alternativ besteht jedoch auch die Möglichkeit, dass die Druckköpfe jeweils einen in Strahllängsrichtung zusammenhängenden Beschichtungsmittelstrahl abgeben im Gegensatz zu dem vorstehend erwähnten Tröpfchenstrahl.

Bei der erfindungsgemäßen Beschichtungseinrichtung wird der Beschichtungsmitteldruck vorzugsweise mit einer sehr geringen Schwankungsbreite kontrolliert, wobei die Schwankungsbreite des Beschichtungsmitteldrucks vorzugsweise kleiner ist als ±500mbar, ±200mbar, ±100mbar oder ±50mbar.

Ferner ist zu erwähnen, dass die Druckköpfe vorzugsweise einen sehr hohen Auftragswirkungsgrad von mindestens 80%, 90%, 95% oder 99% aufweisen, so dass im Wesentlichen das gesamte applizierte Beschichtungsmittel vollständig auf dem Bauteil abgelagert wird, ohne dass Overspray entsteht. Die Druckköpfe sind also im Rahmen der Erfindung vorzugsweise im Wesentlichen Overspray-frei.

Darüber hinaus ist zu bemerken, dass die Druckköpfe vorzugsweise eine ausreichend hohe Flächenbeschichtungsleistung haben, um beispielsweise Kraftfahrzeugkarosseriebauteile zu lackieren. Die Flächenbeschichtungsleistung beträgt deshalb vorzugsweise mindestens 0,5m²/min, 1m²/min, 2m²/min oder sogar 3m²/min.

Ferner ist auch zu bemerken, dass der Volumenstrom des applizierten Beschichtungsmittels und damit die Austrittsgeschwindigkeit des Beschichtungsmittels vorzugsweise so eingestellt werden, dass das Beschichtungsmittel nach dem Auftreffen auf das Bauteil nicht von dem Bauteil abprallt. Weiterhin soll die Auftreffgeschwindigkeit des Beschichtungsmittelstrahls so ausgelegt sein, dass das Beschichtungsmittel nicht in die darunter liegende Lackschicht eindringt, sondern sich das Beschichtungsmittel auf dieselbe legt (schichtet). Die Austrittsgeschwindigkeit des Beschichtungsmittels liegt deshalb vorzugsweise im Bereich von 5m/s bis 30m/s.
Hierbei liegt der Applikationsabstand vorzugsweise im Bereich von 4mm bis 200mm.

Schließlich ist noch zu erwähnen, dass die Ansteuerung des mindestens einen Druckkopfventils vorzugsweise durch einen elektrisch ansteuerbaren Aktor erfolgt, beispielsweise durch einen Magnetaktor oder einen Piezoaktor, wobei derartige Aktoren an sich aus dem Stand der Technik bekannt sind und deshalb nicht näher beschrieben werden müssen.

Darüber hinaus ist zu erwähnen, dass die Erfindung nicht nur Schutz beansprucht für die vorstehend beschriebene erfindungsgemäße Beschichtungseinrichtung. Vielmehr beansprucht die Erfindung auch Schutz für ein entsprechendes Beschichtungsverfahren, wobei sich die meisten Verfahrensschritte bereits aus der vorstehenden Beschreibung ergeben, so dass auf eine separate Beschreibung der einzelnen Verfahrensschritte verzichtet werden kann.

Ergänzend ist jedoch zu erwähnen, dass bei einem Farbwechsel von einem lösemittelbasierten Lack zu einem Wasserlack vorzugsweise zunächst ein Lösemittel-Spülmittel, dann optional ein Trennmittel (z.B. Alkohol) und dann ein wasserbasiertes Spülmittel verwendet wird. Bei einem umgekehrten Wechsel von einem Wasserlack zu einem lösemittelbasierten Lack muss diese Reihenfolge dann natürlich entsprechend umgekehrt werden.

Weiterhin besteht im Rahmen der Erfindung die Möglichkeit, dass sequenziell mit unterschiedlichen Spülmitteln gespült wird, beispielsweise mit einem zunehmenden Gehalt von organischen Lösemitteln.

Ferner besteht auch die Möglichkeit, dass zum Spülen ein Universalspülmittel verwendet wird, das sowohl zum Ausspülen von wasserbasiertem Lack als auch zum Ausspülen von Lösemittellack verwendet wird.

Darüber hinaus kann das Spülen unterstützt werden durch Einleiten von Pulsluft und/oder eines Aerosol aus Druckluft und Spülmittel in den Druckkopf und/oder in das Reinigungsgerät. Darüber hinaus ist zu erwähnen, dass es sich bei dem Spülmittel auch um ein VOC-freies (VOC: Volatile Organic Compound) handeln kann.

Darüber hinaus ist es vorteilhaft, wenn bei einem Spülvorgang die Restflüssigkeiten (z.B. altes Beschichtungsmittel, Spülmittelreste, etc.) aufgefangen und entsorgt werden, damit eine Verunreinigung der Beschichtungseinrichtung vermieden wird.

Vorstehende Ausführungen gelten sowohl für das Spülen der medienführenden Bereiche im Inneren des Druckkopf bzw. der Zuleitungen zum Druckkopf, als auch für den Reinigungs- bzw. Spülvorgang des Druckkopfs im Reinigungsgerät.

Darüber hinaus ist es vorteilhaft, wenn der Druckkopf nach einem Spülvorgang mit dem neuen Beschichtungsmittel angedrückt wird, damit er dann sofort zur Applikation zur Verfügung steht. Bei diesem Andrücken wird vorzugsweise eine definierte Menge des neuen Beschichtungsmittels aus den Düsen des Druckkopfs herausgedrückt, wobei die herausgedrückte Menge des Beschichtungsmittels dann vorzugsweise aufgefangen und entsorgt wird. In der Praxis erfolgt das Andrücken vermutlich erst vor dem Applizieren.

Es wurde bereits vorstehend erwähnt, dass die Ansteuerung des Druckkopfventils durch einen Magnetaktor erfolgen kann. Derartige Magnetaktoren verfügen üblicherweise über eine elektrische Spule, die auf ein Spulenrohr aufgewickelt ist, wobei in dem Spulenrohr ein Anker beweglich angeordnet ist und in Abhängigkeit von der Bestromung der Spule verschoben wird, um die Düse zu schließen bzw. zu öffnen. Hierbei besteht die Möglichkeit, dass Beschichtungsmittel in das Spulenrohr eintreten kann. Bei einem Spülvorgang wird deshalb vorzugsweise auch das Spulenrohr des Magnetaktors gespült. Hierbei besteht die Möglichkeit, dass das Spülmittel durch einen separaten Spülanschluss in Richtung der Düse durch das Spulenrohr geleitet wird. Es besteht jedoch auch umgekehrt auch die Möglichkeit, dass das Spülmittel in entgegengesetzter Richtung durch das Spulenrohr strömt, d.h. zu einem separaten Spülauslass. Darüber hinaus können diese beiden Spülungsarten auch abwechselnd miteinander kombiniert werden.

Weiterhin kann der Druckkopf durch die Rückführung mit Spülmittel gespült werden, d.h. das Spülmittel wird in den Einlass des Druckkopfs eingeleitet und tritt dann durch den Auslass des Druckkopfs in die Rückführung ein, wobei die Düsen dann vorzugsweise geschlossen sind.

Darüber hinaus besteht auch die Möglichkeit, dass das Spülmittel durch den Einlass in den Druckkopf eingeleitet wird und dann bei geöffneten Druckkopfventilen durch die Düsen wieder austritt, um auch die Düsenkanäle zu spülen.

Ferner besteht im Rahmen der Erfindung auch die Möglichkeit, dass das Spülmittel nach einem Farbwechsel mindestens teilweise als Sperrmedium in dem Spulenrohr verbleibt, um zu verhindern, dass Beschichtungsmittel überhaupt in das Spulenrohr eintritt.

Vorstehend wurde ein erster Erfindungsaspekt mit verschiedenen Weiterbildungen, Modifikationen und Abwandlungen beschrieben. Die Erfindung umfasst jedoch auch einen weiteren Erfindungsaspekt, der nachfolgend beschrieben wird und unabhängig von dem ersten Erfindungsaspekt Schutz genießt.

So sieht der zweite Erfindungsaspekt vor, den Druckkopf technisch so zu gestalten, dass im Beschichtungsbetrieb ein Farbwechsel ermöglicht wird. Dies wird dadurch erreicht, dass der Druckkopf bei einem Farbwechsel mit einem Spülmittel spülbar ist, um Beschichtungsmittelreste aus dem Druckkopf herauszuspülen.

Der erfindungsgemäße Druckkopf weist in Übereinstimmung mit dem Stand der Technik eine Beschichtungsmittelzuführung auf, um das zu applizierende Beschichtungsmittel dem Druckkopf zuzuführen. Darüber hinaus weist der erfindungsgemäße Druckkopf vorzugsweise auch eine separate Spülmittelzuführung auf, um ein Spülmittel zuzuführen. Hierbei ist zu erwähnen, dass die Beschichtungsmittelzuführung vorzugsweise von der Spülmittelzuführung getrennt ist, so dass der Druckkopf für die Zuführung des Beschichtungsmittels einerseits und für die Zuführung des Spülmittels andererseits vorzugsweise getrennte Einlässe aufweist.

Bei wenigen Farben könnte ein Farbschlauch (Beschichtungsmittelzuführung) pro Farbe am Applikator (Druckkopf) angeschlossen sein (Integrated Color Changer Technik). Dann gibt es im oder am Applikator einen Spülmittelanschluss und einen Pulsluftanschluss. Diese werden dann zum Spülen benutzt.

Darüber hinaus weist der erfindungsgemäße Druckkopf vorzugsweise auch eine Rückführung auf, um Beschichtungsmittel und/oder Spülmittel zurückzuführen und zwar wahlweise in eine Ringleitung oder in eine Entsorgung. Der erfindungsgemäße Druckkopf weist also neben den getrennten Anschlüssen für die Zuführung des Beschichtungsmittels und des Spülmittels vorzugsweise auch einen weiteren getrennten Anschluss auf, um Beschichtungsmittel bzw. Spülmittel zurückzuführen.

Der Rückführstrom in die Rückführung wird hierbei vorzugsweise durch ein steuerbares Rückführventil gesteuert, das als eigenmediumbetätigtes Rückführventil oder auch als Proportionalventil ausgeführt sein kann. Derartige Ventiltypen sind an sich aus dem Stand der Technik bekannt und müssen deshalb nicht näher beschrieben werden.

In einem bevorzugten Ausführungsbeispiel der Erfindung weist der Druckkopf mehrere Düsen auf, um das Beschichtungsmittel abzugeben. Den einzelnen Düsen ist hierbei vorzugsweise jeweils ein Steuerventil zugeordnet, um die Beschichtungsmittelabgabe durch die jeweilige Düse zu steuern. Die vorstehend erwähnte Spülmittelzuführung weist dann vorzugsweise Zweigleitungen auf, die zu den einzelnen Steuerventilen führen, so dass alle Steuerventile des Druckkopfs gleichzeitig mit dem Spülmittel gespült werden können.

Vorzugsweise sind die einzelnen Zweigleitungen der Spülmittelzuführung so ausgelegt, dass das zugeführte Spülmittel gleichmäßig auf die Zweigleitungen zu den Steuerventilen verteilt wird, so dass die einzelnen Steuerventile im Wesentlichen mit der gleichen Spülmittelmenge gespült werden.

In dem bevorzugten Ausführungsbeispiel der Erfindung weist der Druckkopf mindestens eine Düse zur Abgabe des Beschichtungsmittels und ein zugehöriges Steuerventil zur Steuerung der Beschichtungsmittelabgabe durch die Düse auf, wie bereits vorstehend kurz erläutert wurde. Das Steuerventil kann hierbei wie bei der eingangs beschriebenen bekannten Konstruktion eine elektrische Spule aufweisen, die auf ein Spulenrohr aufgewickelt sein kann. Es wurde bereits eingangs zum Stand der Technik erläutert, dass sich in diesem Spulenrohr Beschichtungsmittelreste ablagern können, was zum einen die Funktionsfähigkeit des Steuerventils beeinträchtigen und zum anderen die Farbwechselfähigkeit verhindern kann. Bei dem erfindungsgemäßen Druckkopf mündet die Spülmittelzuleitung deshalb vorzugsweise in das Spulenrohr, um das Innere des Spulenrohrs zu spülen.

Hierbei ist zu erwähnen, dass das Spulenrohr - wie bei dem eingangs beschriebenen herkömmlichen Steuerventil - vorzugsweise einen kreisförmigen Innenquerschnitt aufweist und einen Spulenkern enthält. Hierbei kann es vorteilhaft sein, wenn der Spulenkern einen Profilquerschnitt aufweist, der den Innenquerschnitt des Spulenrohrs nicht vollständig ausfüllt, um zwischen dem Spulenrohr und dem Spulenkern Platz zu lassen für das Spülmittel, damit das Spülmittel in axialer Richtung durchströmen kann. Beispielsweise kann der Spulenkern hierzu einen sternförmigen Profilquerschnitt aufweisen mit radial abstehenden und in axialer Richtung verlaufenden Rippen, so dass das Spülmittel zwischen den Rippen des Spulenkerns in axialer Richtung strömen kann.

Alternativ besteht die Möglichkeit, dass der Spulenkern in seiner Mantelfläche eine Spülnut aufweist, die beispielsweise axial, in Umfangsrichtung oder spiralförmig verlaufen kann.

Ferner können in dem Spulenkern aber auch axial verlaufende Spülkanäle angeordnet sein.

Ein weiteres Beispiel sieht vor, dass der Profilquerschnitt des Spulenkerns gitterförmig ist und von dem Spülmittel durchströmt werden kann.

Weiterhin ist zu erwähnen, dass der Spulenkern vorzugsweise gegenüber dem Spulenrohr mit einer Dichtung abgedichtet ist, insbesondere mit einer Druckfestigkeit von mehr als 2bar, 4bar oder 6bar.

Es wurde bereits vorstehend kurz erwähnt, dass der Druckkopf mehrere Steuerventile aufweisen kann, die alle gespült werden können. Dabei weisen die einzelnen Steuerventile in der Regel jeweils ein Spulenrohr auf, wobei die Spülmittelzuführung dann in sämtliche Spulenrohre mündet, um alle Spulenrohre spülen zu können.

Ferner ist zu erwähnen, dass das Steuerventil in der Regel - wie bei dem eingangs beschriebenen bekannten Steuerventil - einen verschiebbaren Anker aufweist, der in Abhängigkeit von der Bestromung der Spule verschoben wird und in Abhängigkeit von seiner Stellung die Düse verschließt oder freigibt.

Dieser Anker verläuft vorzugsweise auf einem Teil seiner Länge koaxial in dem Spulenrohr und weist vorzugsweise einen axial durchlässigen Profilquerschnitt auf, damit Spülmittel zwischen dem Anker und der Innenwand des Spulenrohrs strömen kann. Hierzu weist der Anker vorzugsweise einen nichtkreisförmigen Profilquerschnitt auf, der den kreisförmigen Innenquerschnitt des Spulenrohrs nicht vollständig ausfüllt und deshalb eine axiale Spülmittelströmung erlaubt. Beispielsweise kann der Profilquerschnitt des Ankers sternförmig oder kreuzförmig sein.

In einer Variante der Erfindung mündet die Spülmittelzuführung in axialer Richtung zwischen dem Anker und dem Spulenkern in das Spulenrohr.

In einer anderen Variante der Erfindung mündet die Spülmittelzuführung dagegen in axialer Richtung im Bereich des Spulenkerns in das Spulenrohr, insbesondere an dem dem beweglichen Anker abgewandten Ende des Düsenrohrs.

In einer anderen Variante der Erfindung ist der bewegliche Anker in einem spülmitteldurchlässigen Führungskäfig angeordnet, insbesondere in einem geschlitzten Zylinder. Dies bietet den Vorteil, dass der bewegliche Anker bei einem Spülvorgang gespült werden kann, wodurch Beschichtungsmittelablagerungen an dem Anker vermieden werden.

In einer anderen Variante der Erfindung weist der verschiebbare Anker eine mittige Führungsbohrung auf, wobei ein Führungsstift in die Führungsbohrung hineinragt. Dadurch wird eine Linearführung bewirkt, die jedoch ebenfalls gespült werden kann.

In einem anderen Ausführungsbeispiel der Erfindung ist eine flexible Membran vorgesehen, die das Steuerventil von der Beschichtungsmittelzuführung trennt, so dass das Steuerventil durch die Membran vor einem Kontakt mit einem Beschichtungsmittel geschützt wird. Hierbei muss das Steuerventil selbst also überhaupt nicht gespült werden, da das Steuerventil selbst überhaupt nicht in Kontakt mit dem jeweiligen Beschichtungsmittel kommt. Vielmehr soll nur die glatte Beschichtungsmittelseitige Oberfläche der Membran gespült werden, was jedoch sehr einfach und effizient möglich ist, da die glatte Membranoberfläche kaum Ansatzpunkte für Lackablagerungen bildet.

Der erfindungsgemäße Druckkopf ermöglicht vorzugsweise einen schnellen Farbwechsel innerhalb einer Farbwechseldauer von weniger als 1h, 20min, 10min, 30s, 10s oder sogar weniger als 5s.

Hierbei werden auch möglichst geringe Farbwechselverluste angestrebt, die bei dem erfindungsgemäßen Druckkopf vorzugsweise kleiner sind als 51, 21, 200ml, 20ml, 10ml, 5ml oder sogar kleiner als 2ml.

Dies führt auch vorteilhaft zu einem sehr geringeren Spülmittelverbrauch bei einem Farbwechsel, wobei der Spülmittelverbrauch vorzugsweise kleiner ist als 101, 51, 21, 200ml, 100ml, 50ml, 20ml oder sogar kleiner als 10ml.

Ferner besteht im Rahmen der Erfindung auch die Möglichkeit, dass der Druckkopf mehrere getrennte Spülmittelzuführungen aufweist, um verschiedene Spülmittel zuzuführen, die beispielsweise an das jeweilige Beschichtungsmittel angepasst sein können.

Darüber hinaus ist zu erwähnen, dass der Druckkopf mit seinen medienführenden Teilen vorzugsweise so konstruiert ist, dass die medienführenden Teile totraumfrei und/oder hinterschneidungsfrei sind, um die Spülbarkeit zu verbessern.

Zur Verbesserung der Spülbarkeit besteht auch die Möglichkeit, dass der Druckkopf an seinen Oberflächen, die mit dem Beschichtungsmittel in Kontakt kommen, mit einer reinigungsfördernden Beschichtung versehen ist, wobei eine solche Beschichtung auch als "Easy-to-clean-Beschichtung" bekannt ist. Darüber hinaus ist zu bemerken, dass die Erfindung nicht nur Schutz beansprucht für den vorstehend beschriebenen erfindungsgemäßen Druckkopf als einzelnes Bauteil bzw. als Austauschteil. Vielmehr beansprucht die Erfindung auch Schutz für eine komplette Beschichtungseinrichtung mit einem solchen Druckkopf.

Darüber hinaus umfasst die erfindungsgemäße Beschichtungseinrichtung vorzugsweise auch einen Farbwechsler, wie beispielsweise einen Linearfarbwechsler, einen Rotationsfarbwechsler, einen in den Druckkopf integrierten Farbwechsler oder einen A/B-Farbwechsler. Diese Typen von Farbwechslern sind an sich aus dem Stand der Technik bekannt und müssen deshalb nicht weiter beschrieben werden.

Schließlich umfasst die Erfindung auch ein entsprechendes Betriebsverfahren für einen solchen Druckkopf, wobei sich die einzelnen Verfahrensschritte bereits aus der vorstehenden Beschreibung ergeben und deshalb nicht näher beschrieben werden müssen.

Allerdings ist zu erwähnen, dass das Spülmittel ein Universalspülmittel sein kann, das sowohl für wasserbasierten Lack als auch für Lösemittellack geeignet ist. Darüber hinaus kann das Spülmittel ein VOC-freies (VOC: volatile organic compounds) Spülmittel sein.

Bei dem Spülvorgang kann der Druckkopf zusammen mit dem Spülmittel auch oder abwechselnd mit Pulsluft gespült werden.

Ferner besteht auch die Möglichkeit, dass dem Druckkopf zum Spülen ein Aerosol zugeführt wird.

Weiterhin besteht im Rahmen der Erfindung die Möglichkeit, dass dem Druckkopf nacheinander verschiedene Spülmittel zugeführt werden.

In einer Variante des erfindungsgemäßen Betriebsverfahrens wird zunächst ein lösemittelbasierter Lack zugeführt und appliziert. Anschließend wird der Druckkopf dann mit einem lösemittelbasierten Spülmittel gespült, um Reste des lösemittelbasierten Lacks auszuspülen. Optional kann dann noch ein Trennmittel zugeführt werden, beispielsweise Alkohol. Im nächsten Schritt wird dann ein Wasserlack zugeführt und appliziert. Schließlich wird der Druckkopf dann mit einem wasserlackbasierten Spülmittel gespült, um Reste des Wasserlacks auszuspülen.

Die vorstehende Beschreibung erläutert einen Wechsel von einem lösemittelbasierten Lack zu einem Wasserlack. Selbstverständlich ist auch umgekehrt ein Wechsel von einem Wasserlack auf einen lösemittelbasierten Lack möglich, was eine entsprechend geänderte Reihenfolge der vorstehend beschriebenen Verfahrensschritte erfordert.

Nach einem Farbwechsel wird der Druckkopf vorzugsweise mit dem neuen Beschichtungsmittel angedrückt, d.h. befüllt. Dabei wird vorzugsweise auch eine definierte Lackmenge durch die Düse des Druckkopfs ausgebracht.

Beim Betrieb des erfindungsgemäßen Druckkopfs besteht auch die Möglichkeit, dass alle bei einem Spülvorgang abgegebenen Fluide (Beschichtungsmittel und Spülmittel) für eine Entsorgung aufgefangen werden.

Ferner besteht auch die Möglichkeit, dass beim Farbwechsel auch die Außenfläche des Düsenkopfs gespült wird, um dort anhaftende Beschichtungsmittelreste zu entfernen.

Zu dem Spülvorgang ist weiterhin zu erwähnen, dass das Spülmittel nacheinander oder abwechselnd in die Rückführung oder durch die Düse abgeführt werden kann. Darüber hinaus besteht optional auch die Möglichkeit eines Spülens mit einem Gemisch aus Spülmittel und Pulsluft.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische, stark vereinfachte Darstellung einer erfindungsgemäßen Beschichtungseinrichtung mit einem Lackierroboter mit einem Druckkopf und einer Nassablageeinrichtung zur Ablage des demontierten Druckkopfs,
- Figur 2A: eine Abwandlung von Figur 1, wobei zusätzlich eine Reinigungsvorrichtung vorgesehen ist, um den abgelegten Druckkopf von außen zu reinigen und eine Materialzirkulation durch den abgelegten Druckkopf möglich ist,
- Figur 2B: ein Flussdiagramm zur Verdeutlichung eines Farbwechselvorgangs mit einer Ablage des alten Drucckopfs und einer Aufnahme eines neuen Druckkopfs,
- Figur 3A: eine Abwandlung von Figur 1 entsprechend der zweiten Erfindungsvariante mit zwei Druckköpfen an dem Beschichtungsroboter,
- Figur 3B: ein stark vereinfachtes fluidtechnisches Ersatzschaltbild der Beschichtungseinrichtung gemäß Figur 3A mit einem A/B-Farbwechsler,
- Figur 3C: ein Flussdiagramm zur Verdeutlichung des A/B-Betriebs der Beschichtungseinrichtung gemäß den Figuren 3A und 3B,
- Figur 3D: eine Abwandlung des fluidtechnischen Ersatzschaltbildes gemäß Figur 3B mit zwei separaten Farbwechslern für die beiden Druckköpfe, sowie
- Fig. 4A-4D: verschiedene Darstellungen zur Erläuterung der verschiedenen Spülmöglichkeiten.

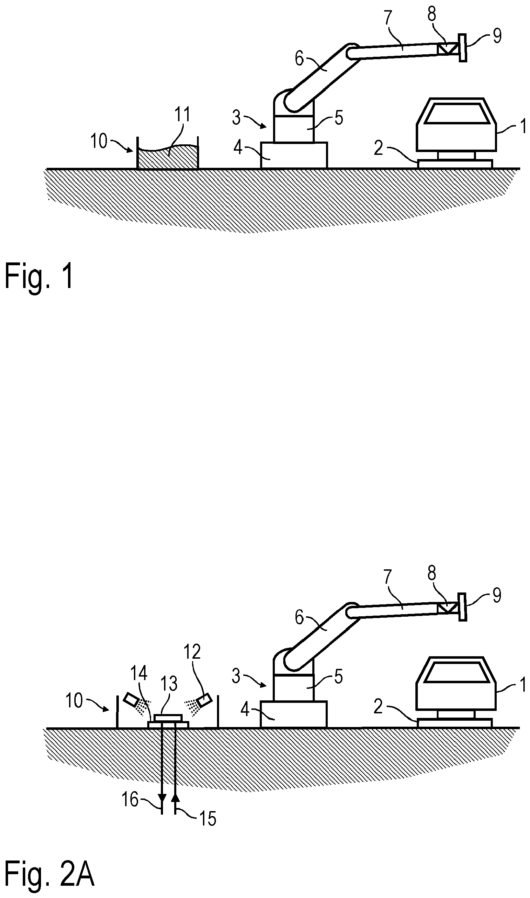

Figur 1 zeigt eine stark vereinfachte, schematische Darstellung einer erfindungsgemäßen Lackieranlage zur Lackierung von Kraftfahrzeugkarosseriebauteilen 1, die von einem Förderer 2 rechtwinklig zur Zeichenebene entlang einer Lackierstraße durch die Lackieranlage gefördert werden, wobei die Förderung wahlweise im Stop-and-Go-Betrieb oder im Line-Tracking-Betrieb erfolgen kann, was an sich aus dem Stand der Technik bekannt ist und deshalb nicht näher beschrieben werden muss.

Neben dem Förderer 2 ist ein Lackierroboter 3 vereinfacht dargestellt, wobei der Lackierroboter 3 eine Roboterbasis 4, ein drehbares Roboterglied 5, einen proximalen Roboterarm 6 ("Arm 1"), einen distalen Roboterarm 7 ("Arm 2") und eine mehrachsige Roboterhandachse 8 aufweist, was an sich aus dem Stand der Technik bekannt ist. Die Roboterbasis 4 kann hierbei wahlweise ortsfest angeordnet sein oder entlang einer nicht dargestellten Verfahrschiene rechtwinklig zur Zeichenebene verfahren werden.

Das drehbare Roboterglied 5 ist hierbei um eine senkrechte Drehachse relativ zu der Roboterbasis 4 drehbar.

Der proximale Roboterarm 6 ist dagegen um eine waagerechte Schwenkachse relativ zu dem drehbaren Roboterglied 5 schwenkbar.

Der distale Roboterarm 7 ist ebenfalls um eine waagerechte Schwenkachse relativ zu dem proximalen Roboterarm 6 schwenkbar.

Die Roboterhandachse 8 weist einen Montageflansch auf, an dem ein Druckkopf 9 auswechselbar montiert ist. Der Druckkopf 9 weist hierbei eine Vielzahl von Düsen auf, um jeweils einen Beschichtungsmittelstrahl auf die Oberfläche des Kraftfahrzeugkarosseriebauteils 1 abzugeben.

Darüber hinaus weist die dargestellte Beschichtungseinrichtung eine Nassablageeinrichtung 10 auf, die mit einem Flüssigkeitsbad 11 gefüllt ist, wobei es sich bei der Flüssigkeit beispielsweise um einen Verdünner handeln kann. Das Flüssigkeitsbad 11 kann alternativ zum Befeuchten des Druckkopfs 9 auch ein getränktes Kissen oder einen Schwamm enthalten.

Bei einem Farbwechsel legt der Beschichtungsroboter 3 den Druckkopf 9 in dem Flüssigkeitsbad 11 ab und entnimmt einen anderen Druckkopf aus der Nassablageeinrichtung 10, damit dann mit dem neuen Druckkopf (nicht dargestellt) ein anderer Lack appliziert werden kann.

Darüber hinaus positioniert der Lackierroboter 3 den Drucckopf 9 in längeren Lackierpausen in dem Flüssigkeitsbad 11, um zu verhindern, dass der Lack in den Düsen des Druckkopfs 9 antrocknet.

Zu diesem Ausführungsbeispiel ist zu erwähnen, dass die Zeichnung nur eine stark vereinfachte schematische Darstellung wiedergibt und lediglich zur Verdeutlichung des erfindungsgemäßen Gedankens dient.

Figur 2A zeigt eine Abwandlung des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Nassablageeinrichtung 10 auch als Reinigungseinrichtung ausgebildet ist und Reinigungsdüsen 12 enthält, um den abgelegten Druckkopf 13 von außen mit einer Reinigungsflüssigkeit (z.B. Verdünner) zu besprühen.

Eine weitere Besonderheit dieses Ausführungsbeispiels besteht darin, dass die Nassablageeinrichtung 10 eine Andockeinrichtung 14 enthält, die eine Strömungsverbindung mit dem abgelegten Druckkopf 13 herstellen kann. So weist der Drucckopf 13 einen Einlass auf, um Flüssigkeit (z.B. Lack, Spülmittel) in den Druckkopf 13 einleiten zu können. Darüber hinaus weist der Druckkopf 13 einen Auslass auf, um die Flüssigkeit (z.B. Lack, Spülmittel) wieder aus dem Druckkopf 13 ableiten zu können. Die Andockeinrichtung 14 kann nun an den Einlass und den Auslass des abgelegten Druckkopfs 13 andocken, so dass dann über Zirkulationsleitungen 15, 16 eine Fluidzirkulation durch den abgelegten Druckkopf 13 erfolgen kann.

Beispielsweise kann der abgelegte Druckkopf 13 dann über die Zirkulationsleitungen 15, 16 mit demselben Lack durchströmt werden, der zuvor von dem Druckkopf 13 appliziert wurde.

Alternativ besteht die Möglichkeit, dass mittels der Andockeinrichtung 14 ein Farbwechsel durchgeführt wird. In diesem Fall wird der abgelegte Druckkopf 13 dann zunächst über die Zirkulationsleitungen 15, 16 mit einem Spülmittel gespült, um den Druckkopf 13 zu reinigen. Anschließend kann der abgelegte Druckkopf 13 dann mit dem neuen Lack angedrückt werden, so dass der Druckkopf 13 dann sofort zur Applikation mit dem neuen Lack zur Verfügung steht.

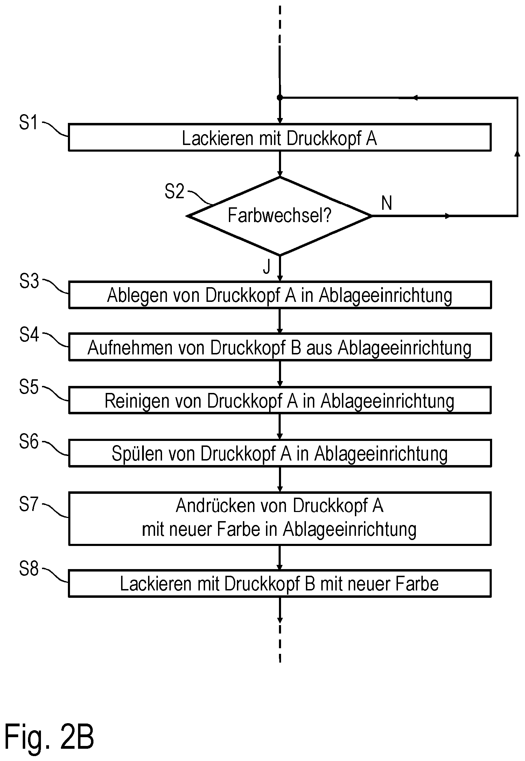

Figur 2B zeigt die Betriebsweise der Beschichtungseinrichtung gemäß Figur 2A in einem Flussdiagramm.

In einem Schritt S1 wird hiermit zunächst mit einem Drucckopf A lackiert, der an dem Lackierroboter 3 montiert ist.

Falls in einem Schritt S2 ermittelt wird, dass ein Farbwechsel gewünscht ist, so wird der montierte Druckkopf A dann zunächst in einem Schritt S3 in der Nassablageeinrichtung 10 abgelegt.

In einem Schritt S4 wird dann ein Druckkopf B aus der Nassablageeinrichtung 10 von dem Lackierroboter 3 aufgenommen.

Der abgelegte Druckkopf A wird dann in einem Schritt S5 in der Nassablageeinrichtung 10 gereinigt und in einem Schritt S6 gespült.

In einem Schritt S7 wird der abgelegte Druckkopf A dann mit einem neuen Lack angedrückt.

Währenddessen kann dann in einem Schritt S8 bereits mit dem neu aufgenommenen Druckkopf B mit dem neuen Lack lackiert werden.

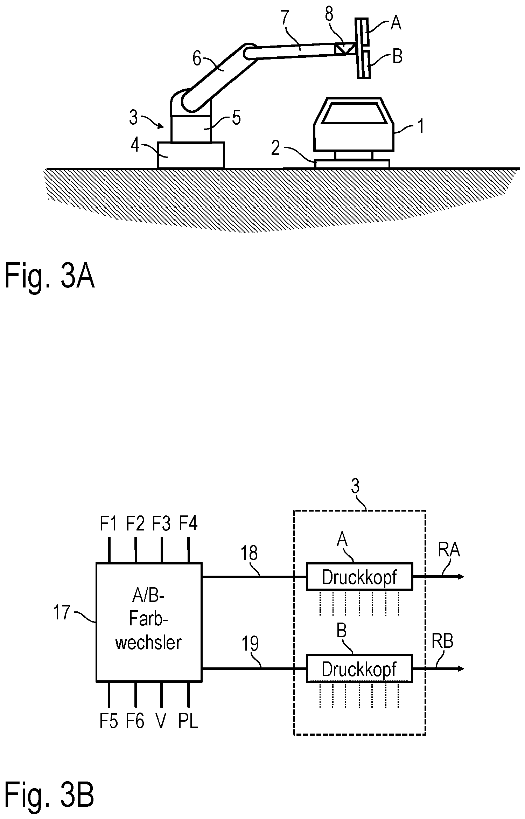

Die Figuren 3A-3C dienen zur Erläuterung einer Abwandlung des Ausführungsbeispiels gemäß den Figuren 2A und 2B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass an dem Lackierroboter 3 zwei Druckköpfe A, B montiert sind, was einen sogenannten A/B-Betrieb mittels eines A/B-Farbwechslers 17 ermöglicht. Der A/B-Farbwechsler 17 ist über zwei parallele Farbleitungen 18, 19 mit den beiden Druckköpfen A, B verbunden, die den nicht benötigten Lack bzw. Spülmittelrest jeweils in eine Rückführleitung RA bzw. RB zurückführen können.

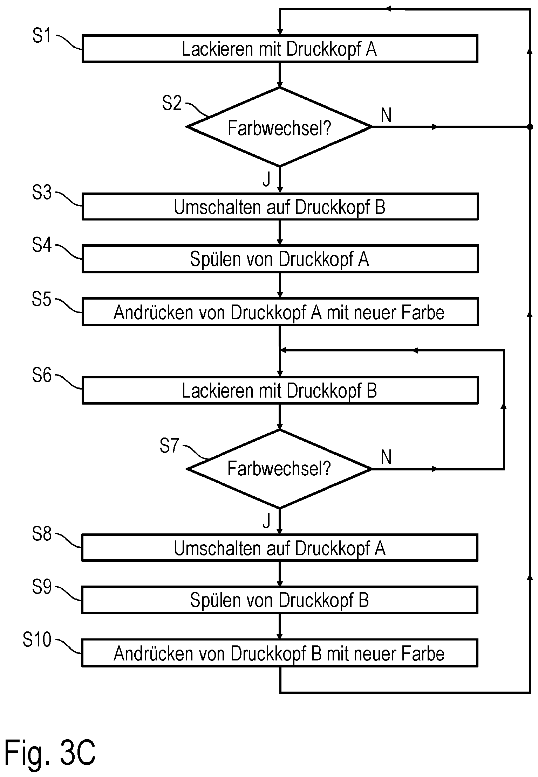

Figur 3C zeigt die Funktionsweise des sogenannten A/B-Betriebs bei der Beschichtungseinrichtung gemäß den Figuren 3A und 3B.

In einem ersten Schritt S1 wird zunächst mit dem Druckkopf A lackiert.

Falls dann in einem Schritt S2 festgestellt wird, dass ein Farbwechsel erfolgen soll, so wird beim Schritt S3 auf den anderen Druckkopf B umgeschaltet.

Dann wird in einem Schritt S4 der Druckkopf A gespült und anschließend am Schritt S5 mit dem gewünschten neuen Lack angedrückt.

Währenddessen kann mit dem Druckkopf B bereits in einem Schritt S6 unterbrechungsfrei ein neuer Lack appliziert werden. Die Schritte S4 und S5 verzögern hierbei also nicht den Farbwechsel, so dass nahezu unterbrechungsfrei bei einem Farbwechsel lackiert werden kann.

Falls dann in einem Schritt S7 wieder festgestellt wird, dass ein erneuter Farbwechsel erfolgen soll, so wird in einem Schritt S8 auch wieder auf den Druckkopf A umgeschaltet und der Druckkopf B wird beim Schritt S9 gespült und in einem Schritt S10 mit neuem Lack angedrückt.

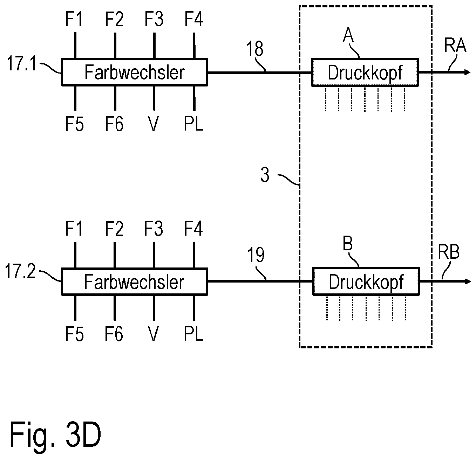

Figur 3D zeigt eine Abwandlung des fluidtechnischen Ersatzschaltbildes gemäß Figur 3B, so dass zur Vermeidung von Wiederholungen mit auf die vorstehende Beschreibung verwiesen wird, wobei für entsprechende Einzelheiten dieselben Bezugszeichen verwendet werden.

Eine Besonderheit dieses Ausführungsbeispiels besteht darin, dass anstelle des A/B-Farbwechslers 17 zwei getrennte Farbwechsler 17.1, 17.2 vorgesehen sind.

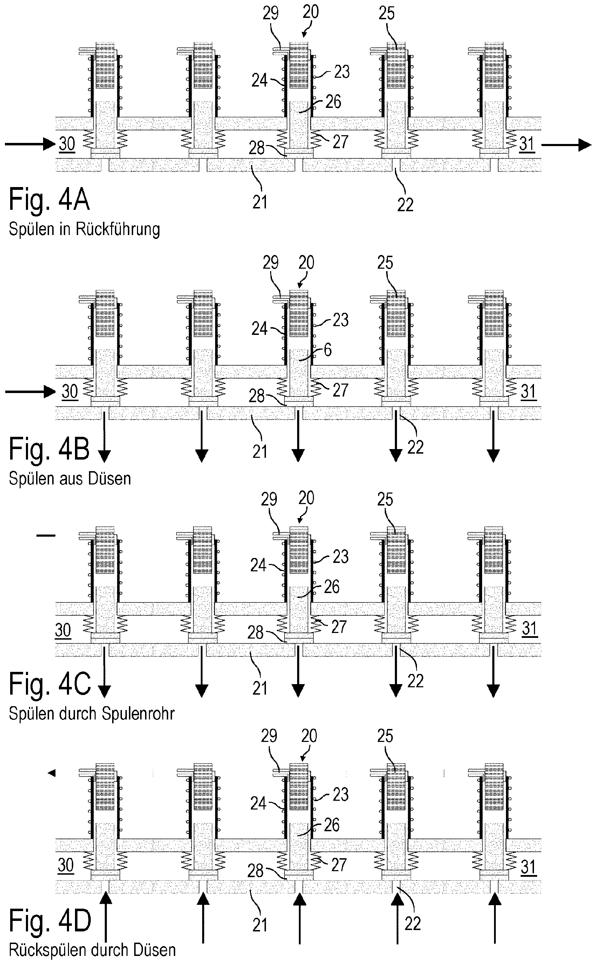

Die Figuren 4A-4D zeigen eine schematische Darstellung eines Druckkopfs mit mehreren Druckkopfventilen 20 zur Steuerung der Beschichtungsmittelabgabe. Der dargestellte Druckkopf weist hierbei eine Düsenplatte 21 mit zahlreichen Düsen 22 auf, die von den einzelnen Druckkopfventilen 20 geschlossen bzw. geöffnet werden können.

Die einzelnen Druckkopfventile 20 werden elektrisch angesteuert und arbeiten magnetisch. Hierzu weisen die Druckkopfventile 20 jeweils eine Spule 23 auf, die auf ein Spulenrohr 24 aufgewickelt ist, wobei das Spulenrohr 24 einen Spulenkern 25 und einen beweglichen Anker 26 aufweist. Der Anker 26 ist hierbei in der Zeichnung in senkrechter Richtung verschiebbar und wird von einer Rückstellfeder 27 in die in den Zeichnungen gezeigte Schließstellung gedrückt, in der eine Dichtung 28 am unteren Ende des Ankers 26 die Düse 22 verschließt.

Zum Öffnen des Druckkopfventils 20 wird die Spule 23 also so bestromt, dass der Anker 26 in der Zeichnung nach oben gedrückt wird, so dass die Dichtung 28 die Düse 22 freigibt.

Darüber hinaus weisen die einzelnen Druckkopfventile 20 jeweils einen Spülanschluss 29 am oberen Ende auf.

Der Druckkopf selbst enthält einen Einlass 30 zum Zuführen von Lack bzw. Spülmittel und einem Auslass 31 zum Abführen von Lack bzw. Spülmittel.

Zu den Zeichnungen gemäß den Figuren 4A-4D ist zu erwähnen, dass in den Zeichnungen alle Druckkopfventile 20 im geschlossenen Zustand gezeichnet sind und die Düsen 22 dann verschließen. Tatsächlich müssen die einzelnen Druckkopfventile 20 jedoch öffnen bzw. schließen, um die nachfolgend beschriebenen Spülvorgänge realisieren zu können.

Weiterhin ist zu erwähnen, dass die Zeichnungen jeweils durch einen großen Pfeil den Strömungsweg des Spülmittels in den verschiedenen Spülvorgängen zeigen.

Bei Figur 4A wird das Spülmittel über den Einlass 30 in den Druckkopf eingeleitet und verlässt den Druckkopf dann wieder über den Auslass 31 in die Rückführung, wobei sämtliche Druckkopfventile 20 geschlossen sind.

Bei dem Spülvorgang gemäß Figur 4B wird das Spülmittel ebenfalls über den Einlass 30 in den Druckkopf eingeleitet und verlässt dann den Druckkopf wieder über die Düsen 22. Bei diesem Spülvorgang müssen die einzelnen Druckkopfventile 20 abweichend von der Zeichnung geöffnet werden.

Bei dem Spülvorgang gemäß Figur 4C wird das Spülmittel dagegen über die Spülanschlüsse 29 der einzelnen Druckkopfventile 20 zugeführt und verlässt den Druckkopf dann wieder über die Düsen 22. Auch hierbei müssen die einzelnen Druckkopfventile 20 die Düsen 22 abweichend von der Zeichnung freigeben.

Bei dem Spülvorgang gemäß Figur 4D wird das Spülmittel dagegen in umgekehrter Richtung durch die geöffneten Düsen 22 eingeführt und verlässt den Druckkopf dann wieder über die Spülanschlüsse 29 der einzelnen Druckkopfventile 20 und/oder (nicht dargestellt) über die Rückführung. Es besteht also im Rahmen der Erfindung die Möglichkeit, dass die Spulenrohre 24 der einzelnen Druckkopfventile 20 bidirektional von Spülmittel durchströmt werden, um eine gute Spülwirkung zu erreichen.

### Bezugszeichenliste:

- 1: Kraftfahrzeugkarosseriebauteil
- 2: Förderer
- 3: Lackierroboter
- 4: Roboterbasis
- 5: Drehbares Roboterglied
- 6: Proximaler Roboterarm ("Arm 1")
- 7: Distaler Roboterarm ("Arm 2")
- 8: Roboterhandachse
- 9: Druckkopf
- 10: Nassablageeinrichtung
- 11: Flüssigkeitsbad
- 12: Reinigungsdüsen in der Nassablageeinrichtung
- 13: Abgelegter Druckkopf in der Nassablageeinrichtung
- 14: Andockeinrichtung in der Nassablageeinrichtung
- 15: Zirkulationsleitung in der Nassablageeinrichtung
- 16: Zirkulationsleitung in der Nassablageeinrichtung
- 17: A/B-Farbwechsler
- 17.1: Farbwechsler
- 17.2: Farbwechsler
- 18: Farbleitungen
- 19: Farbleitungen
- 20: Druckkopfventile
- 21: Düsenplatte
- 22: Düsen
- 23: Spule
- 24: Spulenrohr
- 25: Spulenkern
- 26: Anker
- 27: Rückstellfeder
- 28: Dichtung
- 29: Spülanschluss
- 30: Einlass des Druckkopfs
- 31: Auslass des Druckkopfs
- A, B: Druckkopf
- F1-F6: Farbleitungen
- PL: Pulsluftleitung
- V: Verdünnerleitung
- RA, RB: Rückführleitungen

## Patentansprüche

1. Beschichtungseinrichtung zur Beschichtung von Bauteilen 5 (1) mit einem Beschichtungsmittel, nämlich zur Lackierung von Kraftfahrzeugkarosseriebauteilen (1) mit einem Lack, mit
a) einem mehrachsigen Beschichtungsroboter (3) mit einer mehrachsigen Roboterhandachse (8), sowie mit
b) einem ersten Druckkopf (9), der im Betrieb einen eng begrenzten Beschichtungsmittelstrahl abgibt im Gegensatz zu einem Sprühnebel, mit
b1) mindestens einer Düse (22) zur Abgabe eines Beschichtungsmittelstrahls des Beschichtungsmittels aus der Düse auf die Oberfläche des zu beschichtenden Bauteils (1), und
b2) mindestens einem Druckkopfventil (20) zur Steuerung der Beschichtungsmittelabgabe durch die Düse (22),
b3) wobei der erste Druckkopf (9) an dem Beschichtungsroboter (3) montiert ist und von dem Beschichtungsroboter (3) über die Oberfläche des zu beschichtenden Bauteils (1) geführt wird, **gekennzeichnet durch** c) eine Zeitsteuerung zur zeitgesteuerten Spülung des ersten Druckkopfs (9) mit einem Spülmittel,
d) wobei die Zeitsteuerung
d1) jeweils nach Ablauf eines vorgegebenen Spülintervalls einen Spülvorgang des ersten Druckkopfs (9) auslöst, und/oder
d2) jeweils nach Ablauf einer vorgegebenen Stillstandsdauer eines die zu beschichtenden Bauteile (1) fördernden Förderers einen Spülvorgang des ersten Druckkopfs (9) auslöst.

2. Beschichtungseinrichtung nach Anspruch 1,
**dadurch gekennzeichnet,**
a) **dass** der erste Druckkopf (9) auswechselbar an dem Beschichtungsroboter (3) montiert ist und bei einem Farbwechsel gegen einen zweiten Druckkopf (13) ausgewechselt werden kann, oder
b) **dass** zusätzlich zu dem ersten Druckkopf (A) ein zweiter Druckkopf (B) an dem Beschichtungsroboter (3) montiert ist, wobei die beiden Druckköpfe (A, B) jeweils ein bestimmtes Beschichtungsmittel applizieren, um ohne einen Druckkopfaustausch einen Farbwechsel zu ermöglichen.

3. Beschichtungseinrichtung nach Anspruch 2, **dadurch gekennzeichnet,**
a) **dass** die Zeitsteuerung auch den zweiten Druckkopf (9, 13, A, B) zeitgesteuert mit einem Spülmittel spült, und
b) **dass** das Spülintervall 1h, 2h oder 4h beträgt, und
c) **dass** die Stillstandsdauer mehr als 10min, 20min, 30min oder 1h beträgt.

4. Beschichtungseinrichtung nach Anspruch 2 oder 3, **dadurch gekennzeichnet,**
a) **dass** die Beschichtungseinrichtung eine Ablageeinrichtung (10) aufweist zur Ablage des von dem Beschichtungsroboter (3) demontierten ersten Druckkopfs in der Ablageeinrichtung (10) und zur Aufnahme des in der Ablageeinrichtung (10) befindlichen zweiten Druckkopfs anstelle des abgelegten ersten Druckkopfs für eine anschließende Beschichtungsmittelapplikation mit dem aufgenommenen zweiten Druckkopf,
b) **dass** die Ablageeinrichtung (10) eine Nassablagereinrichtung (10) ist, in der die Düsen (22) des abgelegten Druckkopfs feucht gehalten werden, um ein Antrocknen des flüssigen Beschichtungsmittels während der Ablage zu verhindern,
c) **dass** die Nassablagereinrichtung (10) ein Flüssigkeitsbad (11) aufweist, das mit einer Flüssigkeit gefüllt ist und in die der Druckkopf (9) während der Ablage zumindest teilweise eingetaucht wird, wobei die Flüssigkeit ein Antrocknen des flüssigen Beschichtungsmittels während der Ablage verhindert.

5. Beschichtungseinrichtung nach Anspruch 4,
**dadurch gekennzeichnet,**
a) **dass** der Druckkopf (9, 13, A, B) einen Einlass (30) aufweist, um dem Druckkopf (9, 13, A, B) im abgelegten Zustand in der Nassablagereinrichtung (10) das Beschichtungsmittel oder ein Spülmittel zuzuführen,
b) **dass** der Druckkopf (9, 13, A, B) einen Auslass (31) aufweist, um aus dem Druckkopf (9, 13, A, B) im abgelegten Zustand in der Nassablagereinrichtung (10) das Beschichtungsmittel oder das Spülmittel zurückzuführen,
c) **dass** die Nassablagereinrichtung (10) Zirkulationsanschlüsse (15, 16) aufweist, die während der Ablage des Druckkopfs (9, 13, A, B) mit dem Einlass (30) und dem Auslass (31) des Druckkopfs verbunden sind, um das Beschichtungsmittel oder ein Spülmittel während der Ablage durch den abgelegten Druckkopf (9, 13, A, B) zirkulieren zu lassen.

6. Beschichtungseinrichtung nach Anspruch 2,
**dadurch gekennzeichnet,**
a) **dass** der erste Druckkopf (A) Beschichtungsmittel applizieren kann, während der zweite Druckkopf (B) mit einem Spülmittel gespült wird, und
b) **dass** der zweite Druckkopf (B) Beschichtungsmittel applizieren kann, während der erste Druckkopf (A) mit dem Spülmittel gespült wird, und
c) **dass** die beiden Druckköpfe (A, B) jeweils abwechselnd mit dem Spülmittel gespült werden und Beschichtungsmittel applizieren.

7. Beschichtungseinrichtung nach Anspruch 2 oder 6, **dadurch gekennzeichnet,**
a) **dass** ein erster Beschichtungsmittelkreis durch den ersten Druckkopf (A) verläuft, so dass das Beschichtungsmittel durch den ersten Druckkopf (A) zirkulieren kann,
b) **dass** ein zweiter Beschichtungsmittelkreis durch den zweiten Druckkopf (B) verläuft, so dass das Beschichtungsmittel durch den zweiten Druckkopf (B) zirkulieren kann.

8. Beschichtungseinrichtung nach einem der Ansprüche 2, 6 oder 7, **dadurch gekennzeichnet,**
a) **dass** für jedes zu applizierende Beschichtungsmittel jeweils ein separater Druckkopf (A, B) an dem Beschichtungsroboter (3) angebracht ist, so dass die Druckköpfe jeweils nur von dem zugehörigen Beschichtungsmittel durchströmt werden, und
b) **dass** die Anzahl der an dem Beschichtungsroboter (3) montierten Druckköpfe (A, B) größer ist als 2 und
c) **dass** die Anzahl der an dem Beschichtungsroboter (3) montierten Druckköpfe (A, B) kleiner ist als 6, und
d) **dass** die einzelnen Druckköpfe (A, B) jeweils an eine separate Beschichtungsmittelzuleitung angeschlossen sind, so dass die Beschichtungsmittelzuleitungen jeweils nur von dem zugehörigen Beschichtungsmittel durchströmt werden.

9. Beschichtungseinrichtung nach einem der Ansprüche 1 oder 6 oder 7, **dadurch gekennzeichnet,**
a) **dass** für jedes zu applizierende Beschichtungsmittel jeweils ein separater Druckkopf (A, B) in der Ablageeinrichtung (10) vorhanden ist, so dass die Druckköpfe jeweils nur von dem zugehörigen Beschichtungsmittel durchströmt werden, und
b) **dass** die Anzahl der an dem Beschichtungsroboter (3) montierten Druckköpfe (A, B) größer ist als 2, 4, 6, 10, 20, und kleiner ist als 30, 40 oder 50, und
c) **dass** die einzelnen Druckköpfe (A, B) jeweils an eine separate Beschichtungsmittelzuleitung angeschlossen sind, so dass die Beschichtungsmittelzuleitungen jeweils nur von dem zugehörigen Beschichtungsmittel durchströmt werden.

10. Beschichtungseinrichtung nach Anspruch 4 oder einem der Ansprüche 5 bis 9, wenn abhängig vom Anspruch 4, **dadurch gekennzeichnet,**
a) **dass** zur Reinigung des ersten Druckkopfs (9, 13, A, B) und/oder des zweiten Druckkopfs (9, 13, A, B) eine Reinigungsvorrichtung (12) vorgesehen ist, und
b) **dass** die Reinigungsvorrichtung (12) getrennt von dem Beschichtungsroboter (3) ortsfest angeordnet ist, und
c) **dass** der Beschichtungsroboter (3) den ersten und/oder den zweiten Druckkopf (9, 13, A, B) in die Reinigungsvorrichtung (12) einführen kann, um den ersten und/oder den zweiten Druckkopf in der Reinigungsvorrichtung zu reinigen, und
d) **dass** die Reinigungsvorrichtung (12) und die Ablageeinrichtung (10) ein einheitliches Bauteil bilden.

11. Beschichtungsverfahren zur Beschichtung von Bauteilen (1) mit einem Beschichtungsmittel, insbesondere zur Lackierung von Kraftfahrzeugkarosseriebauteilen (1) mit einem Lack, insbesondere mittels einer Beschichtungseinrichtung nach einem der vorhergehenden Ansprüche, mit den folgenden Schritten:
a) Bewegen eines ersten Druckkopfs (9) mit mindestens einer Düse (22) und einem zugehörigen Druckkopfventil (20) mittels eines mehrachsigen Beschichtungsroboters (3) mit einer mehrachsigen Roboterhandachse (8) über eine Oberfläche des zu beschichtenden Bauteils (1), und
b) Abgabe eines Beschichtungsmittelstrahls eines ersten Beschichtungsmittels durch die Düse (22) des ersten Druckkopfs (9) auf die Oberfläche des zu beschichtenden Bauteils (1),
c) Zeitgesteuertes Spülen des ersten Druckkopfs (9) mit einem Spülmittel, wobei
d) die zu beschichtenden Bauteile Kraftfahrzeugkarosseriebauteile sind, wobei
e) das Beschichtungsmittel ein Lack ist, wobei
f) der erste Druckkopf (9) einen eng begrenzten Beschichtungsmittelstrahl abgibt im Gegensatz zu einem Sprühnebel, und wobei
g) ein Spülvorgang des ersten Druckkopfs (9) ausgelöst wird jeweils nach Ablauf
g1) eines vorgegebenen Spülintervalls und/oder
g2) einer vorgegebenen Stillstandsdauer eines die zu beschichtenden Bauteile (1) fördernden Förderers.

12. Beschichtungsverfahren nach Anspruch 11, **gekennzeichnet durch** einen Farbwechsel mit folgenden Schritten:
a) Auswechseln des ersten Druckkopfs (9) durch einen zweiten Druckkopf (13) zur anschließenden Abgabe eines Beschichtungsmittelstrahls eines zweiten Beschichtungsmittels durch den zweiten Druckkopf (13) auf die Oberfläche des zu beschichtenden Bauteils (1), oder
b) Umschalten der Beschichtungsmittelabgabe von dem ersten Druckkopf (A) auf einen zweiten Druckkopf (B), der an demselben Beschichtungsroboter (3) montiert ist zur anschließenden Abgabe eines Beschichtungsmittelstrahls eines zweiten Beschichtungsmittels durch den zweiten Druckkopf (B).

13. Beschichtungsverfahren nach Anspruch 12, **gekennzeichnet durch** folgende Schritte bei dem Farbwechsel:
a) Ablegen des ersten Druckkopfs (9) von dem Beschichtungsroboter (3) in einer Ablageeinrichtung (10),
b) Aufnehmen des zweiten Druckkopfs (13) von dem Beschichtungsroboter (3), insbesondere von der Ablageeinrichtung (10),
c) optional Baden oder zumindest teilweise Eintauchen des abgelegten ersten bzw. zweiten Druckkopfs in einem Flüssigkeitsbad (11) in der Ablageeinrichtung (10), um ein Antrocknen des Beschichtungsmittels in dem abgelegten ersten bzw. zweiten Druckkopf (9, 13, A, B) zu verhindern,
d) optional Befeuchten des abgelegten ersten bzw. zweiten Druckkopfs auf einem Befeuchtungsflies (11) in der Ablageeinrichtung (10), um ein Antrocknen des Beschichtungsmittels in dem abgelegten ersten bzw. zweiten Druckkopf (9, 13, A, B) zu verhindern,
e) optional Zirkulieren von Beschichtungsmittel und/oder Spülmittel durch den abgelegten ersten bzw. zweiten Druckkopf (9, 13, A, B) in der Ablageeinrichtung (10), um ein Antrocknen des Beschichtungsmittels in dem abgelegten ersten bzw. zweiten Druckkopf (9, 13, A, B) zu verhindern,
f) wobei optional der erste Druckkopf (A) Beschichtungsmittel appliziert, während der zweite Druckkopf (B) mit einem Spülmittel gespült wird,
g) wobei optional der zweite Druckkopf (B) Beschichtungsmittel appliziert, während der erste Druckkopf (A) mit einem Spülmittel gespült wird,
h) optional Applizieren des ersten Beschichtungsmittels durch den ersten Druckkopf (A), während das zweite Beschichtungsmittel bei geschlossenen Druckkopfventilen (20) des zweiten Druckkopfs (B) durch den zweiten Druckkopf (B) zirkuliert,
i) optional Applizieren des zweiten Beschichtungsmittels durch den zweiten Druckkopf (B), während das erste Beschichtungsmittel bei geschlossenen Druckkopfventilen (20) des ersten Druckkopfs (A) durch den ersten Drucckopf zirkuliert.

14. Beschichtungsverfahren nach einem der Ansprüche 11 bis 13, **gekennzeichnet durch**
a) folgende Schritte bei einem Farbwechsel von einem lösemittelbasierten Lack zu einem Wasserlack:
a1) Spülen des ersten oder zweiten Druckkopfs mit einem Lösemittel-Spülmittel,
a2) Optional Spülen des ersten oder zweiten Drucckopfs mit einem Trennmittel, insbesondere mit Alkohol,
a2) Spülen des ersten oder zweiten Druckkopfs mit einem wasserbasierten Spülmittel,
b) folgende Schritte bei einem Farbwechsel:
b1) Sequentielles Spülen des ersten oder zweiten Druckkopfs (9, 13, A, B) mit unterschiedlichen Spülmitteln, insbesondere mit einem zunehmenden Gehalt von organischem Lösemittel, und/oder
b2) Spülen des ersten oder zweiten Druckkopfs (9, 13, A, B) mit einem Universalspülmittel sowohl zum Ausspülen von wasserbasiertem Lack als auch zum Ausspülen von Lösemittellack, und/oder
b3) Spülen des ersten oder zweiten Druckkopfs (9, 13, A, B) mit einem Gemisch aus Pulsluft, Spülmittel und/oder Aerosol, und/oder
b4) Spülen des ersten oder zweiten Druckkopfs (9, 13, A, B) mit einem mit einem VOC-freien Spülmittel,
c) folgende Schritte bei einem Farbwechsel:
c1) Einführen des ersten oder zweiten Druckkopfs (9, 13, A, B) in eine Reinigungsvorrichtung (12),
c2) Reinigen des ersten oder zweiten Druckkopfs (9, 13, A, B) in der Reinigungsvorrichtung (12), insbesondere durch
c2.1) Spülen des ersten oder zweiten Druckkopfs (9, 13, A, B) in der Reinigungsvorrichtung (12) mit einem Spülmittel, und/oder
c2.2) Besprühen der Außenflächen des ersten oder zweiten Druckkopfs (9, 13, A, B) mit einem Reinigungsmittel, und/oder
c3) Auffangen und Entsorgen der in der Reinigungsvorrichtung (12) ausgebrachten Flüssigkeiten, insbesondere des Spülmittels, der Reinigungsflüssigkeit und der ausgespülten Beschichtungsmittelreste, und/oder
c4) Andrücken mit einem neuen Beschichtungsmittel in der Reinigungsvorrichtung (12), vorzugsweise bis das neue Beschichtungsmittel mit einer definierten Menge aus der Düse (22) des Druckkopfs (9, 13, A, B) austritt.

15. Beschichtungsverfahren nach Anspruch 12 oder einem der Ansprüche 13 bis 14, wenn abhängig vom Anspruch 12, **gekennzeichnet durch** folgenden Schritt bei einem Farbwechsel:
Spülen des ersten oder zweiten Druckkopfs (9, 13, A, B) mit einem Spülmittel, insbesondere mit einem reinen Spülmittel oder mit einem Spülmittel-Pulsluft-Gemisch, wobei das Spülmittel bzw. das Spülmittel-Pulsluft-Gemisch abwechselnd in eine Rückführung (31) und durch die Düse (22) des Druckkopfs (9, 13, A, B) abgeführt wird.

## Claims

1. Coating device for coating components (1) with a coating agent, namely for painting motor vehicle body components (1) with a paint, with
a) a multi-axis coating robot (3) with a multi-axis robot hand axis (8), and with
b) a first printhead (9) which emits a narrowly limited jet of coating agent during operation in contrast to a spray mist, with
b1) at least one nozzle (22) for delivering a coating agent jet of the coating agent from the nozzle onto the surface of the component (1) to be coated, and
b2) at least one printhead valve (20) for controlling the release of the coating agent through the nozzle (22),
b3) wherein the first printhead (9) is mounted on the coating robot (3) and is guided by the coating robot (3) over the surface of the component (1) to be coated,
**characterized by**
c) a time control for time-controlled rinsing of the first printhead (9) with a rinsing agent,
d) wherein the time control
d1) triggers a rinsing process of the first printhead (9) each after expiration of a predetermined rinsing interval has expired, and/or
d2) triggers a rinsing process of the first printhead (9) each after expiration of a predetermined standstill period of a conveyor conveying the components (1) to be coated has elapsed.

2. Coating device according to claim 1,
**characterized in that**
a) the first printhead (9) is replaceably mounted on the coating robot (3) and can be exchanged for a second printhead (13) in the event of a color change, or
b) in addition to said first printhead (A), a second printhead (B) is mounted on said coating robot (3), said two printheads (A, B) each applying a designated coating agent to enable color change without printhead replacement.

3. Coating device according to claim 2,
**characterized in that**
a) the time control also rinses the second printhead (9, 13, A, B) with a rinsing agent in a time-controlled manner, and
b) the rinsing interval is 1h, 2h or 4h, and
c) the standstill period is more than 10 minutes, 20 minutes, 30 minutes or 1 hour.

4. Coating device according to claim 2 or 3,
**characterized in that**
a) the coating device comprises a deposit device (10) for depositing the first printhead dismantled from the coating robot (3) in the deposit device (10) and for taking the second printhead located in the deposit device (10) instead of the deposited first printhead for subsequent coating agent application with the taken second printhead,
b) the deposit device (10) is a wet deposit device (10) in which the nozzles (22) of the deposited printhead are kept moist in order to prevent the liquid coating agent from drying during deposition,
c) the wet deposit device (10) optionally has a liquid bath (11) which is filled with a liquid and into which the printhead (9) is at least partially immersed during deposition, the liquid preventing the liquid coating agent from drying during deposition.

5. Coating device according to claim 4,
**characterized in that**
a) the printhead (9, 13, A, B) has an inlet (30) for supplying the coating agent or a rinsing agent to the printhead (9, 13, A, B) in the deposited state in the wet deposit device (10),
b) the printhead (9, 13, A, B) has an outlet (31) for returning the coating agent or the rinsing agent from the printhead (9, 13, A, B) in the deposited state in the wet deposit device (10),
c) said wet deposit device (10) has circulation ports (15, 16) connected to said inlet (30) and said outlet (31) of said printhead during deposition of said printhead (9, 13, A, B) for circulating said coating agent or a rinsing agent through said deposited printhead (9, 13, A, B) during deposition.

6. Coating device according to claim 2,
**characterized in that**
a) said first printhead (A) is capable of applying coating agent while said second printhead (B) is flushed with a rinsing agent, and
b) said second printhead (B) is capable of applying coating agent while said first printhead (A) is flushed with said rinsing agent, and
c) the two printheads (A, B) are each rinsed alternately with the rinsing agent and apply coating agents.

7. Coating device according to claim 2 or 6,
**characterized in that**
a) a first coating agent circuit passes through the first printhead (A) so that the coating agent can circulate through the first printhead (A),
b) a second coating agent circuit passes through the second printhead (B) so that the coating agent can circulate through the second printhead (B).

8. Coating device according to any of claims 2, 6 or 7,
**characterized in that**
a) a separate printhead (A, B) is each attached to the coating robot (3) for each coating agent to be applied, so that the printheads are each only flowed through by the associated coating agent, and
b) the number of printheads (A, B) mounted on the coating robot (3) is greater than 2, and
c) the number of printheads (A, B) mounted on the coating robot (3) is smaller than 6, and
d) the individual printheads (A, B) are each connected to a separate coating agent supply line, so that only the associated coating agent flows through the coating agent supply lines in each case.

9. Coating device in accordance with one of claims 1 or 6 or 7, **characterized in that**
a) a separate printhead (A, B) is always present in the deposit device (10) for each coating agent to be applied, so that only the associated coating agent flows through the printheads in each case, and
b) the number of printheads (A, B) mounted on the coating robot (3) is greater than 2, 4, 6, 10, 20 and less than 30, 40 or 50 and
c) the individual printheads (A, B) are each connected to a separate coating agent supply line, so that only the associated coating agent flows through the coating agent supply lines in each case.

10. Coating device according to claim 4 or one of claims 5 to 9, if dependent on claim 4, **characterized in that**
a) a cleaning device (12) is provided for cleaning the first printhead (9, 13, A, B) and/or the second printhead (9, 13, A, B), and
b) the cleaning device (12) is arranged in a stationary manner separately from the coating robot (3), and
c) the coating robot (3) can introduce the first and/or the second printhead (9, 13, A, B) into the cleaning device (12) to clean the first and/or the second printhead in the cleaning device, and
d) the cleaning device (12) and the deposit device (10) form a unitary component.

11. Coating method for coating components (1) with a coating agent, in particular for painting motor vehicle body components (1) with a paint, in particular by means of a coating device according to one of the preceding claims, with the following steps:
a) moving a first printhead (9) with at least one nozzle (22) and an associated printhead valve (20) by means of a multi-axis coating robot (3) with a multi-axis robot hand axis (8) over a surface of the component (1) to be coated, and
b) discharging a coating agent jet of a first coating agent through the nozzle (22) of the first printhead (9) onto the surface of the component (1) to be coated,
c) time-controlled rinsing of the first printhead (9) with a rinsing agent, wherein
d) the components to be coated are motor vehicle body components (1),
e) the coating agent is a paint,
f) the first printhead (9) emits a narrowly limited jet of coating agent in contrast to a spray mist, and wherein
g) a rinsing process of the first printhead (9) is triggered each after expiration of
g1) a predetermined rinsing interval, and/or
g2) a predetermined standstill period of a conveyor for conveying the components (1) to be coated.

12. Coating method according to claim 11,
**characterized by** a color change with the following steps:
a) exchanging the first printhead (9) by a second printhead (13) for the subsequent delivery of a coating agent jet of a second coating agent through the second printhead (13) onto the surface of the component (1) to be coated, or
b) switching coating agent delivery from said first printhead (A) to a second printhead (B) mounted on the same coating robot (3) for subsequent delivery of a coating agent jet of a second coating agent through said second printhead (B).

13. Coating method according to claim 12, **characterized by** the following steps in the color change:
a) depositing the first printhead (9) from the coating robot (3) in a deposit device (10), and
b) taking-up the second printhead (13) by the coating robot (3), in particular from the deposit device (10),
c) optionally bathing or at least partially immersing the deposited first or second printhead in a liquid bath (11) in the deposit device (10) in order to prevent the coating agent from drying in the deposited first or second printhead (9, 13, A, B), and/or
d) optionally moistening the deposited first or second printhead on a moistening fleece (11) in the deposit device (10) in order to prevent the coating agent from drying in the deposited first or second printhead (9, 13, A, B), and/or
e) optionally circulating coating agent and/or rinsing agent through the deposited first and second printheads (9, 13, A, B), respectively, in the depositing means (10) to prevent the coating agent from drying in the deposited first and second printheads (9, 13, A, B, respectively),
f) wherein said first printhead (A) optionally applies coating agent while said second printhead (B) is rinsed with a rinsing agent, and
g) wherein the second printhead (B) optionally applies coating agent while the first printhead (A) is rinsed with a rinsing agent.
h) optionally applying said first coating agent through said first printhead (A) while circulating said second coating agent through said second printhead (B) with closed printhead valves (20) of said second printhead (B); and
i) optionally applying the second coating agent through the second printhead (B) while the first coating agent circulates through the first printhead with the printhead valves (20) of the first printhead (A) being closed.

14. Coating method according to any one of claims 11 to 13, **characterized by**
a) the following steps during a color change from a solvent-based paint to a water-based paint:
a1) rinsing the first or second printhead with a solvent rinsing agent,
a2) optionally, rinsing the first or second printhead with a solvent, especially alcohol,
a3) rinsing said first or second printhead with a water-based rinsing agent,
b) the following steps during a color change:
b1) Sequential rinsing of the first or second printhead (9, 13, A, B) with different rinsing agents, in particular with an increasing content of organic solvent, and/or
b2) rinsing the first or second printhead (9, 13, A, B) with a universal rinsing agent both for rinsing out water-based paint and for rinsing out solvent-based paint, and/or
b3) rinsing the first or second printhead (9, 13, A, B) with a mixture of pulsed air, rinsing agent and/or aerosol, and/or
b4) rinsing the first or second printhead (9, 13, A, B) with a VOC-free rinsing agent,
c) the following steps during a color change:
c1) inserting the first or second printhead (9, 13, A, B) into a cleaning device (12),
c2) cleaning the first or second printhead (9, 13, A, B) in the cleaning device (12), in particular by
c2.1) rinsing the first or second printhead (9, 13, A, B) in the cleaning device (12) with a rinsing agent, and/or
c2.2) spraying the outer surfaces of the first or second printhead (9, 13, A, B) with a cleaning agent, and/or
c3) collecting and disposing of the liquids applied in the cleaning device (12), in particular the rinsing agent, the cleaning liquid and the rinsed coating agent residues, and/or
c4) pre-filling with a new coating agent in the cleaning device (12), preferably until the new coating agent emerges in a defined quantity from the nozzle (22) of the printhead (9, 13, A, B).

15. Coating method according to claim 12 or one of claims 13 to 14, if dependent on claim 12, **characterized by** the following steps during a color change:
rinsing the first or second printhead (9, 13, A, B) with a rinsing agent, in particular with a pure rinsing agent or with a mixture of rinsing agent and pulsed air, the rinsing agent or the mixture of rinsing agent and pulsed air being discharged alternately into a recirculation system (31) and through the nozzle (22) of the printhead (9, 13, A, B),.

## Revendications

1. Dispositif de revêtement pour le revêtement de composants (1) avec un produit de revêtement, à savoir pour la peinture de composants de carrosseries de véhicules automobiles (1) avec une peinture, avec
a) un robot de revêtement multiaxial (3) avec un axe manuel de robot multiaxial (8), ainsi qu'avec
b) une première tête d'impression (9), qui, lors du fonctionnement, émet un jet de produit de revêtement étroitement limité, contrairement à un brouillard de pulvérisation, avec
b1) au moins une buse (22) pour l'émission d'un jet de produit de revêtement u produit de revêtement de la buse vers la surface du composant à revêtir (1) et
b2) au moins une soupape de tête d'impression (20) pour le contrôle de l'émission de produit de revêtement par la buse (22),
b3) dans lequel la première tête d'impression (9) est montée sur le robot de revêtement (3) et est guidée par le robot de revêtement (3) au-dessus de la surface du composant à revêtir (1),
**caractérisé par**
c) un contrôle temporel pour le rinçage contrôlé dans le temps de la première tête d'impression (9) avec un produit de rinçage,
d) dans lequel le contrôle temporel
d1) déclenche respectivement, après l'écoulement d'un intervalle de rinçage prédéterminé, un processus de rinçage de la première tête d'impression (9) et/ou
d2) déclenche respectivement, après l'écoulement d'une durée d'immobilisation prédéterminée d'un dispositif de convoyage transportant les composants à revêtir (1), un processus de rinçage de la première tête d'impression (9).

2. Dispositif de revêtement selon la revendication 1,
**caractérisé en ce que**
a) la première tête d'impression (9) est montée de manière interchangeable sur le robot de revêtement (3) et peut être remplacée lors d'un changement de couleur par une deuxième tête d'impression (13) ou
b) en plus de la première tête d'impression (A), une deuxième tête d'impression (B) est montée sur le robot de revêtement (3), dans lequel les deux têtes d'impression (A, B) appliquent respectivement un produit de revêtement déterminé, afin de permettre un changement de couleur sans changer de tête d'impression.

3. Dispositif de revêtement selon la revendication 2, **caractérisé en ce que**
a) le contrôle temporel rince également de manière contrôlée dans le temps la deuxième tête d'impression (9, 13, A, B) avec un produit de rinçage et
b) l'intervalle de rinçage est de 1 h, 2 h ou 4 h et
c) la durée d'immobilisation est supérieure à 10 min, 20 min, 30 min ou 1 h.

4. Dispositif de revêtement selon la revendication 2 ou 3,
**caractérisé en ce que**
a) le dispositif de revêtement comprend un dispositif de dépose (10) pour la dépose de la première tête d'impression démontée du robot de revêtement (3) dans le dispositif de dépose (10) et pour le logement de la deuxième tête d'impression se trouvant dans le dispositif de dépose (10) à la place de la première tête d'impression déposée pour une application suivante de produit de revêtement avec la deuxième tête d'impression logée,
b) le dispositif de dépose (10) est un dispositif de dépose humide (10) dans lequel les buses (22) de la tête d'impression déposée sont maintenues humides afin d'empêcher un séchage du produit de revêtement liquide pendant la dépose,
c) le dispositif de dépose humide (10) comprend un bain de liquide (11) qui est rempli d'un liquide et dans lequel la tête d'impression (9) est immergée au moins partiellement pendant la dépose, dans lequel le liquide empêche un séchage du produit de revêtement liquide pendant la dépose.

5. Dispositif de revêtement selon la revendication 4,
**caractérisé en ce que**
a) la tête d'impression (9, 13, A, B) comprend une entrée (30) afin d'introduire, dans l'état déposé, dans le dispositif de dépose humide (10), le produit de revêtement ou un produit de rinçage à la tête d'impression (9, 13, A, B),
b) la tête d'impression (9, 13, A, B) comprend une sortie afin de retourner, dans l'état déposé, dans le dispositif de dépose humide (10), le produit de revêtement ou un produit de rinçage à la tête d'impression (9, 13, A, B),
c) le dispositif de dépose humide (10) comprend des raccordements de circulation (15, 16) qui, pendant la dépose de la tête d'impression (9, 13, A, B), sont reliées avec l'entrée (30) et la sortie (31) de la tête d'impression, afin de faire circuler le produit de revêtement ou un produit de rinçage pendant la dépose à travers la tête d'impression déposée (9, 13, A, B).

6. Dispositif de revêtement selon la revendication 2,
**caractérisé en ce que**
a) la première tête d'impression (A) peut appliquer un produit de revêtement tandis que la deuxième tête d'impression (B) est rincée avec un produit de rinçage et
b) la deuxième tête d'impression (B) peut appliquer un produit de revêtement tandis que la première tête d'impression (A) est rincée avec un produit de rinçage et
c) les deux têtes d'impression (A, B) sont, en alternance, rincés avec le produit de rinçage et appliquent le produit de revêtement.

7. Dispositif de revêtement selon la revendication 2 ou 6,
**caractérisé en ce que**
a) un premier circuit de produit de revêtement s'étend à travers la première tête d'impression (A) de façon à ce que le produit de revêtement puisse circuler à travers la première tête d'impression (A),
b) un deuxième circuit de produit de revêtement s'étend à travers la deuxième tête d'impression (B) de façon à ce que le produit de revêtement puisse circuler à travers la deuxième tête d'impression (B).

8. Dispositif de revêtement selon l'une des revendications 2, 6 ou 7, **caractérisé en ce que**
a) pour chaque produit de revêtement à appliquer, une tête d'impression (A, B) est montée sur le robot de revêtement (3), de façon à ce que les têtes d'impression soit traversées chacune uniquement par le produit de revêtement correspondant et
b) le nombre de têtes d'impression (A, B) montées sur le robot de revêtement (3) est supérieur à 2 et
c) le nombre de têtes d'impression (A, B) montées sur le robot de revêtement (3) est inférieur à 6 et
d) les différentes têtes d'impression (A, B) sont raccordées chacune à une conduite d'alimentation de produit de revêtement séparée, de façon à ce que les conduites d'alimentation de produit de revêtement soient traversées uniquement par le produit de revêtement correspondant.

9. Dispositif de revêtement selon l'une des revendications 1 ou 6, **caractérisé en ce que**
a) pour chaque produit de revêtement à appliquer, une tête d'impression (A, B) séparée est présente dans le dispositif de dépose (10), de façon à ce que les têtes d'impression soit traversées chacune uniquement par le produit de revêtement correspondant et
b) le nombre de têtes d'impression (A, B) montées sur le robot de revêtement (3) est supérieur à 2, 4, 6, 10, 20 et inférieur à 30, 40 ou 50 et
c) les différentes têtes d'impression (A, B) sont raccordées chacune à une conduite d'alimentation de produit de revêtement séparée, de façon à ce que les conduites d'alimentation de produit de revêtement soient traversées uniquement par le produit de revêtement correspondant.

10. Dispositif de revêtement selon la revendication 4 ou l'une des revendications 5 à 9, si dépendantes de la revendication 4, **caractérisé en ce que**
a) pour le nettoyage de la première tête d'impression (9, 13, A, B) et/ou de la deuxième tête d'impression (9, 13, A, B), un dispositif de nettoyage (12) est prévu et
b) le dispositif de nettoyage (12) est disposé de manière fixe séparément du robot de revêtement (3) et
c) le robot de revêtement (3) peut introduire la première et/ou la deuxième tête d'impression (9, 13, A, B) dans le dispositif de nettoyage (12), afin de nettoyer la première et/ou la deuxième tête d'impression dans le dispositif de nettoyage et
d) le dispositif de nettoyage (12) et le dispositif de dépose (10) constituent un seul composant.

11. Procédé de revêtement pour le revêtement de composants (1) avec un produit de revêtement, plus particulièrement pour la peinture de composants de carrosseries de véhicules automobiles (1) avec une peinture, plus particulièrement au moyen d'un dispositif de revêtement selon l'une des revendications précédentes, avec les étapes suivantes :
a) déplacement d'une première tête d'impression (9) avec au moins une buse (22) et une soupape de tête d'impression (20) correspondante au moyen d'un robot de revêtement multiaxial (3) avec un axe manuel de robot multiaxial (8) au-dessus d'une surface du composant à revêtir (1) et
b) émission d'un jet de produit de revêtement d'un premier produit de revêtement par la buse (22) de la première tête d'impression (9) sur la surface du composant à revêtir (1),
c) rinçage contrôlé dans le temps de la première tête d'impression (9) avec un produit de rinçage, dans lequel
d) les composants à revêtir sont des composants de carrosseries de véhicules automobiles, dans lequel
e) le produit de revêtement est une peinture, dans lequel
f) la première tête d'impression (9) émet un jet de produit de revêtement limité contrairement à un brouillard de pulvérisation et dans lequel
g) un processus de rinçage de la première tête d'impression (9) est déclenché respectivement après l'écoulement
g1) d'un intervalle de rinçage prédéterminé et/ou
g2) d'une durée d'immobilisation prédéterminée d'un dispositif de convoyage transportant les composants à revêtir (1).

12. Procédé de revêtement selon la revendication 11, **caractérisé par** un changement de couleur avec les étapes suivantes :
a) remplacement de la première tête d'impression (9) par une deuxième tête d'impression (13) pour l'émission ultérieure d'un jet de produit de revêtement d'un deuxième produit de revêtement par la deuxième tête d'impression (13) sur la surface du composant à revêtir (1) ou
b) commutation de l'émission de produit de revêtement de la première tête d'impression (A) vers une deuxième tête d'impression (B), qui est montée sur le même robot de revêtement (3), pour l'émission ultérieure d'un jet de produit de revêtement d'un deuxième produit de revêtement par la deuxième tête d'impression (B).

13. Procédé de revêtement selon la revendication 12, **caractérisé par** les étapes suivantes lors du changement de couleur :
a) dépose de la première tête d'impression (9) du robot de revêtement (3) vers un dispositif de dépose (10),
b) logement de la deuxième tête d'impression (13) par le robot de revêtement (3), plus particulièrement par le dispositif de dépose (10),
c) en option, bain ou immersion au moins partielle de la première respectivement deuxième tête d'impression dans un bain de liquide (11) dans le dispositif de dépose (10), afin d'empêcher un séchage du produit de revêtement dans la première respectivement deuxième tête d'impression (9, 13, A, B) déposée,
d) en option, humidification de la première respectivement deuxième tête d'impression déposée sur un buvard d'humidification (11) dans le dispositif de dépose (10), afin d'empêcher un séchage du produit de revêtement dans la première respectivement deuxième tête d'impression (9, 13, A, B) déposée,
e) en option, mise en circulation d'un produit de revêtement et/ou produit de rinçage à travers la première respectivement deuxième tête d'impression (9, 13, A, B) déposée dans le dispositif de dépose (10), afin d'empêcher un séchage du produit de revêtement dans la première respectivement deuxième tête d'impression (9, 13, A, B) déposée,
f) en option, la première tête d'impression (A) applique un produit de revêtement tandis que la deuxième tête d'impression (B) est rincée avec un produit de rinçage,
g) en option, la deuxième tête d'impression (B) applique un produit de revêtement tandis que la première tête d'impression (A) est rincée avec un produit de rinçage,
h) en option application du premier produit de revêtement par la première tête d'impression (A), tandis que le deuxième produit de revêtement circule à travers la deuxième tête d'impression (B) lorsque les soupapes de tête d'impression (20) de la deuxième tête d'impression (B) sont fermées,
i) en option, application du deuxième produit de revêtement par la deuxième tête d'impression (B), tandis que le premier produit de revêtement circule à travers la première tête d'impression (A) lorsque les soupapes de tête d'impression (20) de la première tête d'impression (A) sont fermées.

14. Procédé de revêtement selon l'une des revendications 11 à 13, **caractérisé par**
a) les étapes suivantes lors d'un changement de couleur d'une peinture à base de solvants à une peinture à base d'eau :
a1) rinçage de la première ou deuxième tête d'impression avec un produit de rinçage à base de solvants,
a2) en option, rinçage de la première ou deuxième tête d'impression avec un produit de séparation, plus particulièrement avec de l'alcool,
a3) rinçage de la première ou deuxième tête d'impression avec un produit de rinçage à base d'eau,
b) les étapes suivantes lors d'un changement de couleur :
b1) rinçage séquentiel de la première ou deuxième tête d'impression (9, 13, A, B) avec différents produits de rinçage, plus particulièrement avec une concentration croissante en solvant organique et/ou
b2) rinçage de la première ou deuxième tête d'impression (9, 13, A, B) avec un produit de rinçage universel aussi bien pour le rinçage de la peinture à base d'eau que pour le rinçage de la peinture à base de solvants et/ou
b3) rinçage de la première ou deuxième tête d'impression (9, 13, A, B) avec un mélange d'air pulsé, de produit de rinçage et/ou d'un aérosol et/ou
b4) rinçage de la première ou deuxième tête d'impression (9, 13, A, B) avec un produit de rinçage sans COV,
c) les étapes suivantes lors d'un changement de couleur :
c1) introduction de la première ou deuxième tête d'impression (9, 13, A, B) dans un dispositif de nettoyage (12),
c2) nettoyage de la première ou deuxième tête d'impression (9, 13, A, B) dans le dispositif de nettoyage (12), plus particulièrement par
c2.1) rinçage de la première ou deuxième tête d'impression (9, 13, A, B) dans le dispositif de nettoyage (12) avec un produit de rinçage et/ou
c2.2) pulvérisation des surfaces externes de la première ou deuxième tête d'impression (9, 13, A, B) avec un produit de nettoyage et/ou
c3) collecte et évacuation des liquides extraits dans le dispositif de nettoyage (12), plus particulièrement du produit de rinçage, du liquide de nettoyage et des résidus de produit de revêtement rincés et/ou
c4) compression avec un nouveau produit de revêtement dans le dispositif de nettoyage (12), de préférence jusqu'à ce que le nouveau produit de revêtement sorte avec un débit défini de la buse (22) de la tête d'impression (9, 13, A, B).

15. Procédé de revêtement selon la revendication 12 ou selon l'une des revendications 13 à 14, si dépendantes de la revendication 12, **caractérisé par** l'étape suivante lors d'un changement de couleur :
rinçage de la première ou deuxième tête d'impression (9, 13, A, B) avec un produit de rinçage, plus particulièrement avec un produit de rinçage pur ou avec un mélange de produit de rinçage et d'air pulsé, dans lequel le produit de rinçage respectivement le mélange de produit de rinçage et d'air pulsé est évacué en alternance dans une conduite de retour (31) et à travers la buse (22) de la tête d'impression (9, 13, A, B).
